**Europäisches Patentamt**

(19) **European Patent Office**

**Office européen des brevets**

(11) Veröffentlichungsnummer : **0 380 564 B1**

(12) # EUROPÄISCHE PATENTSCHRIFT

(45) Veröffentlichungstag der Patentschrift :
**14.08.91 Patentblatt 91/33**

(51) Int. Cl.$^5$ : **B60K 41/04, F16H 59/18**

(21) Anmeldenummer : **88908913.2**

(22) Anmeldetag : **11.10.88**

(86) Internationale Anmeldenummer :
**PCT/AT88/00080**

(87) Internationale Veröffentlichungsnummer :
**WO 89/03319 20.04.89 Gazette 89/09**

(54) **VERFAHREN UND VORRICHTUNG ZUR STEUERUNG EINES KRAFTFAHRZEUG-ANTRIEBSTRANGES.**

(30) Priorität : **12.10.87 AT 2680/87**

(43) Veröffentlichungstag der Anmeldung :
**08.08.90 Patentblatt 90/32**

(45) Bekanntmachung des Hinweises auf die Patenterteilung :
**14.08.91 Patentblatt 91/33**

(84) Benannte Vertragsstaaten :
**AT BE CH DE FR GB IT LI LU NL SE**

(56) Entgegenhaltungen :
**EP-A- 144 608**
**WO-A-85/01256**
**DE-A- 2 714 559**

(56) Entgegenhaltungen :
**DE-A- 3 526 671**
**GB-A- 2 151 048**
**US-A- 4 350 057**
**US-A- 4 638 690**
**US-A- 4 685 062**

(73) Patentinhaber : **AUTO POLLY GESELLSCHAFT M.B.H.**
**Wiener Strasse 36**
**A-2620 Neunkirchen (AT)**

(72) Erfinder : **POLLY, Johann**
**Wiener Stra e 36**
**A-2620 Neunkirchen (AT)**

(74) Vertreter : **Weinzinger, Arnulf, Dipl.-Ing. et al**
**Riemergasse 14**
**A-1010 Wien (AT)**

## Beschreibung

<u>Gebiet der Erfindung</u>

Die Erfindung betrifft ein Verfahren zur Steuerung eines Antriebsstranges für Kraftfahrzeuge mit einer elektronischen Motorleistungssteuerung, der ein Fahrpedal zur Betätigung einer Drosselklappe oder Regelstange zugeordnet ist, mit einem Bremspedal, und mit einem Automatikgetriebe, z.B. einem automatischen Schaltgetriebe mit elektronisch gesteuerter mechanischer Trockenkupplung, anhand von Betriebsdaten, Kennwerten und Parametern, wobei bestimmte Pedalbewegungen als willkürliche Fahrer-Schaltbefehle erfaßt werden.

Weiters bezieht sich die Erfindung auf eine Vorrichtung zur Durchführung eines derartigen Verfahrens mit zumindest einem, einem Fahrpedal als Leistungssteuerorgan zugeordneten, dessen Stellung erfassenden Sollwertgeber für die Fahrleistung, mit dem eine Prozessor-Steuereinheit verbunden ist zur Ermittlung eines geeigneten Ganges und zur automatischen Steuerung von Gangwechselvorgängen, wobei die Prozessor-Steuereinheit weiters eingangsseitig mit einer Speichereinrichtung für Kenndaten des Kraftfahrzeuges, mit zumindest einem dem Bremspedal zugeordneten Sensor und mit Betriebsdaten, wie Motordrehzahl, Motortemperatur, Fahrgeschwindigkeit, Kupplungsstellung und Gangkennung, erfassenden Sensoren sowie ausgangsseitig mit einem Ausgangskreis zur Ansteuerung des Getriebes, der Kupplung und der Motor-Drosselklappe bzw.-Regelstange verbunden ist.

Stand der Technik

Automatische Getriebe bzw. automatische Steuerungen für das Getriebe oder allgemeiner den Antriebsstrang eines mit einer Brennkraftmaschine ausgerüsteten Kraftfahrzeuges sind bereits in vielen Ausführungen bekannt, vgl. beispielsweise die DE-A-2811574 oder die DE-A-3526671. üblicherweise werden bei den bekannten Steuerungen die — fallweise auch adaptiven -Schaltpunhte durch die Stellung der Drosselklappe bzw. der Motorlast sowie der Getriebeantriebs- oder -abtriebs-Drehzahl bestimmt, wobei in einem der elektronischen Steuerung zugeordneten Speicher, üblicherweise einem sog. ROM (read only memory-Festwertspeicher), entsprechende motorspezifische bzw. kraftfahrzeugspezifische Daten und Kennfelder gespeichert sind. Weiters ist es bekannt, einen sog. Fahrweisesteller zur Vorgabe eines Fahrweiseparameters für eine mehr verbrauchsoptimierte oder aber eine eher leistungsorientierte Fahrweise vorzusehen. Mit einem Schalthebel ist darüberhinaus ein Sperren der höheren Gänge bzw. das Festhalten des kleinsten Ganges möglich.

Hinsichtlich der Vorgabe einer die Fahrweise angebenden Größe wurde in der EP-A-144608 ferner bereits vorgeschlagen, aufgrund der zyklischen Abtastung der Fahrpedalstellungen und der dadurch erhaltenen Fahrpedalsignalwerte in einem Prozessor eine den Fahrstil des jeweiligen Fahrers sowie auch die Fahrsituation angebende Fahrpedalaktivität zu errechnen. Diese Fahrpedalaktivitäts-Information wird sodann für die Festlegung der Grenzwerte bei den Schaltvorgängen mit berücksichtigt.

Bekannt ist andererseits auch eine elektronische Motorleistungssteuerung, wobei als Leistungssteuerorgan das "elektronische" Fahrpedal dient, dessen Stellung jeweils durch einen Sensor, den Sollwertgeber für die Fahrleistung, erfaßt und in ein entsprechendes elektrisches Signal umgewandelt wird. Dieses Fahrpedalstellungssignal gelangt, üblicherweise zusammen mit weiteren Sensorsignalen, wie insbesondere solchen, die Informationen über die Motordrehzahl, die Fahrgeschwindigkeit, die Kennung für den momentan eingelegten Gang, die Motortemperatur und dergl. Betriebsdaten enthalten, über einen Eingangskreis, in dem beispielsweise eine Analog/Digital-Umwandlung der Signale sowie eine entsprechende Aufbereitung erfolgt, zu einem Mikroprozessor, der dann aufgrund dieser Signale über einen Ausgangskreis mit einer Leistungselektronik einen elektrischen Stellmotor ansteuert, der die Drosselklappe oder den Einspritzpumpen-Verstellhebel bzw. die Regelstange betätigt. Mit einer solchen Elektronik können auch weitere Funktionen erfüllt werden, wie z.B. Leerlaufstabilisierung, Drehzahlbegrenzung, Antriebsschlupf-und Schleppmomentregelung, Fahrgeschwindigkeitsregelung (sog. "Tempomat"), Ruckregelung ("Bonanza-Schwingung"), Progressionskennung und elektronische Lupe, und dergleichen.

In der DE-A-2714559 ist beispielsweise eine Steuerung von Stufengetrieben beschrieben, bei der vergleichsweise rasche Bewegungen des Fahrpedals bzw. genauer der Drosselklappe als willkürliche Fahrer-Schaltbefehle erfaßt werden sollen. Nun ist die Ableitung von Schaltbefehlen aus einer mit bestimmter Mindestgeschwindigkeit ausgeführten Fahrpedalbewegung allein denkbar unzuverlässig, da eine etwas zu schnelle Fahrpedalbewegung ungewollt bzw. unbewußt, beispielsweise durch eine besondere Verkehrssituation, ausgelöst werden kann, wie unmittelbar einzusehen ist. Überdies ist die Auslösung eines Schaltvorganges in eine bestimmte Richtung, hinauf oder herunter, für den Fahrer nur sehr beschränkt möglich, da die Richtung des Schaltvorganges letztlich nicht vom Fahrer, sondern vorrangig von der augenblicklichen Drehzahl bestimmt wird.

2

Bei der bekannten Steuerung kann es somit zu unerwünschten Schaltvorgängen kommen. Wenn beispielsweise der Fahrer bei einer Bergfahrt, vor einer Kehre, das Fahrpedal etwas zu schnell zurücknimmt, kann ein völlig unnötiger Hochschaltvorgang ausgelöst werden, wogegen bereits vorsorglich ein Rückschaltvorgang zweckmäßig wäre.

Schließlich sind auch elektronisch gesteuerte, mit elektromotorischen Wegstellern oder pneumatisch mit Unterdruck betätigte mechanische Trockenkupplungen mit Lagerückmeldung bekannt, wobei die Ansteuerung ebenfalls über einen Mikroprozessor samt nachgeschalteter Leistungselektronik erfolgt. Dabei wird automatisch bei jedem Gangwechsel ausgekuppelt, weiters dann, wenn die Motordrehzahl unter eine Mindestdrehzahl absinkt, bzw. in den oberen Gängen, wenn das Fahrpedal in der Nullstellung ist. Das Wiedereinkuppeln wird beim "Gasgeben" gangabhängig gesteuert. Beim Bremsen erfolgt ein Einkuppeln bremsdruckabhängig. Damit wird die Schubabschaltung zur Kraftstoffeinsparung ausgenutzt. Beim Anfahren erfolgt das Einkuppeln drehzahlabhängig derart, daß der Motor bei einer entsprechenden Fahrpedalstellung immer im Drehzahlbereich des maximalen Motordrehmomentes bleibt und die Schleifzeit durch Zwangseinkuppeln begrenzt ist. Beim Schalten erfolgt das Einkuppeln zeitlich in Abhängigkeit von den einzelnen Gängen und von der Stellung des Fahrpedals. Bei Stillstand des Fahrzeuges und laufendem Motor wird bei einer Betätigung des Fahrpedals nur dann eingekuppelt, wenn ein Anfahr- oder Rückwärtsgang eingelegt ist.

Von Nachteil ist bei den bekannten Antriebsstrang-Steuerungen, daß die für eine Verbrauchsoptimierung notwendige Gangzahl und Overdrivespreizung bei allen bisher bekannten automatischen Gangsteuerungen zu so hoher Schalthäufigkeit führt, daß eine praktische Anwendung bisher nicht denkbar war. Dem Rechner fehlt bei den bekannten Steuerungen jede Informationsmöglichkeit über die voraussichtliche weitere Entwicklung des Leistungsbedarfes. Vom Rechner werden daher beim Zurücknehmen des Fahrpedals bei kurzzeitiger Geschwindigkeitsreduktion z.B. in der Kolonne, vor Überholvorgängen oder vor Kreuzungen sehr oft vollkommen unnötige Hochschaltvorgänge ausgelöst, wodurch dann nach kurzer Zeit wieder Rückschaltvorgänge notwendig werden. Andererseits werden bei Beschleunigungsvorgängen z.B. durch ein nur um 1 mm zu weites Durchtreten des Fahrpedals sehr oft auch unnötige Rückschaltvorgänge ausgelöst. Eine ausreichende Beschleunigung wäre oft auch im höheren Gang bei kleinerer Motordrehzahl, höherem Drehmoment und damit besserem Motorwirkungsgrad und geringerer Geräuschentwicklung ohne Schaltvorgang erzielbar.

Offenbarung der Erfindung

Allgemein stellt sich somit die Aufgabe, bei einem automatisierten Antriebsstrang für Kraftfahrzeuge, mit einem Verbrennungsmotor mit elektrischer Motorleistungssteuerung, einem Kennungswandler mit optimalem mechanischen Wirkungsgrad, beispielsweise einem automatischen Schaltgetriebe, und einer elektronisch gesteuerten mechanischen Trockenkupplung, die größte Betriebshäufigkeit des Motors so weit wie möglich mit dem Bestbereich für den spezifischen Kraftstoffverbrauch im Motorkennfeld des jeweiligen Motors zur Deckung zu bringen, und zwar in allen Fahrbereichen, die den Kraftstoffverbrauch bestimmen, also vor allem für die Beschleunigungsphasen, die Fahrt auf Steigungen sowie die Fahrt mit konstanter Geschwindigkeit.

Mehr im einzelnen ist es daher Ziel der Erfindung, ein Verfahren bzw. eine Vorrichtung zur automatischen Steuerung des Antriebsstranges eines Kraftfahrzeuges zu schaffen, wobei der Fahrer auf einfache und risikolose Weise die Möglichkeit hat, vorausschauend vorsorgliche Schaltvorgänge unabhängig von der augenblicklichen Leistungsanforderung auszulösen, andererseits unnötige Schaltvorgänge unterdrückt werden, wobei nichtsdestoweniger die durch das Kraftfahrzeug, insbesondere seinen Antriebsstrang, gegebenen, in einem Speicher gespeicherten Parameter und Kennwerte (Kennfelder) Berücksichtigung finden, etwa um Grenzdrehzahlen nicht zu überschreiten, und wobei ein möglichst geringer Kraftstoffverbrauch gewährleistet werden soll.

Das erfindungsgemäße Verfahren der eingangs angegebenen Art ist dadurch gekennzeichnet, daß die Bewegungen des Fahrpedals und /oder des Bremspedals auf Bewegungsabläufe mit Änderungen in der Bewegungsrichtung überwacht und bestimmte, vorgegebene Bewegungsrichtungsänderungs-Abläufe als unmittelbare Fahrer-Gangwahlsteuerbefehle selektiv erfaßt werden, wobei der jeweilige Getriebegang bzw. dessen Zulässigkeit anhand der Betriebsdaten und Parameter rechnerisch bzw. überprüft und anschließend gegebenenfalls ein Gangwechsel einschließlich der Kupplungsbetätigung ausgelöst und durch die Motorleistungssteuerung während des Gangwechselvorganges unabhängig von der Fahrpedalstellung die sich im neuen Gang ergebende Motordrehzahl angesteuert wird, und daß andererseits automatische Hochschaltvorgänge infolge einer bloßen Rücknahme des Fahrpedals, solange die Motordrehzahl unterhalb einer zulässigen Maximaldrehzahl bleibt, unterdrückt werden.

In entsprechender Weise ist die erfindungsgemäße Vorrichtung der eingangs angeführten Art dadurch gekennzeichnet, daß die Prozessor-Steuereinheit ein Modul zur laufenden überwachung der Bewegung des Fahrpedals und/oder des Bremspedals auf Bewegungsabläufe mit Änderungen in der Bewegungsrichtung und selektiven Erfassung bestimmter, vorgegebener Bewegungsrichtungsänderungs-Abläufe als unmittelbare Fahrer-Gangwahlsteuerbefehle enthält.

Erfindungsgemäß werden somit, anders als beim Stand der Technik, selektive Analysen von Pedalbewegungsabläufen durchgeführt und aufgrund dieser exakten Analysen der bestimmten Pedalbewegungen gegebenenfalls Gangwechselvorgänge ausgelöst, so daß der Fahrer direkt und vollkommen unabhängig von der augenblicklichen Leistungsanforderung bzw. Drosselklappen- oder Regelstangenstellung bereits vorausschauend und willkürlich Schaltvorgänge auslösen kann. Es wird also der Fahrer, der die Verkehrssituation im voraus überblickt, als fallweise wirkendes Korrektiv in die Steuerung miteinbezogen, wobei ein gleitender übergang von der Automatik zum Fahrer und umgekehrt sichergestellt ist. Im Hinblick auf die anzustrebende Kraftstoffeinsparung ist eine derartige Steuerung besonders vorteilhaft in Verbindung mit Getrieben mit höheren Gangzahlen und großer Overdrive-Spreizung, wie etwa bei einem automatischen Stirnrad-Synchron-Getriebe für PKW mit fünf oder sechs Getriebegängen und großer Overdrive-Spreizung, oder bei lastschaltbaren Doppelkupplungs-Getrieben, etwa für Sportwagen ; ebenso kann bei feinstufigen Vielgang-Gruppengetrieben für LHW auch bei vollautomatischer Auslösung der Schaltvorgänge durch die erfindungsgemäße Steuerung die Schalthäufigkeit auf ein vernünftiges Ausmaß reduziert werden. Vor allem kann auch der LHW-Fahrer damit Schaltvorgänge bereits vorausschauend allein mit dem Fahr- oder Bremspedal auslösen.

Von besonderem Vorteil ist es erfindungsgemäß, wenn bei einem Fahrpedal-Bewegungsablauf, bei dem das Fahrpedal bei fahrendem Kraftfahrzeug in die Nullstellung und aus dieser in eine erste zumindest annähernde Ruhestellung gebracht wird, in der die Geschwindigkeit der Fahrpedalbewegung einen vorgegebenen Wert unterschreitet, der dieser Fahrpedal-Ruhestellung zugeordnete Motordrehzahlbereich aufgrund von hierfür gespeicherten Kennwerten ermittelt wird, wobei beispielsweise bereits während der Pedalbewegung die der jeweiligen Fahrpedalstellung zugeordnete Motordrehzahl kontinuierlich, spätestens aber im Augenblick der ersten Fahrpedal-Ruhestellung angesteuert wird, und wobei abhängig von der momentanen Fahrzeuggeschwindigkeit der zugehörige Getriebegang ermittelt und der Schalt- und Einkupplungsvorgang ausgelöst wird, wonach die Motorleistung wieder durch die Drosselklappen- oder Regelstangenstellung primär abhängig von der Fahrpedal-Stellung gesteuert wird.

In entsprechender Weise ist eine aus Sicherheitsgründen vorteilhafte Ausführungsform der erfindungsgemäßen Vorrichtung dadurch gekennzeichnet, daß dem Fahrpedal ein gesonderter die Fahrpedal-Nullstellung erfassender Sensor zugeordnet ist.

Der Fahrer hat also jederzeit, insbesondere nach Roll- oder Bremsvorgängen, die Möglichkeit, nach einer kurzen Rücknahme des Fahrpedals in die Nullage durch die anschließende Wahl der Fahrpedalstellung den Motordrehzahlbereich und damit jenen Getriebegang zu wählen, der bei der augenblicklichen Fahrgeschwindigkeit diesem Drehzahlbereich entspricht. Im Anschluß an eine derartige Gangwahl sind dann in an sich bei der Motorleistungssteuerung bekannter Weise den Fahrpedalstellungen wieder Motordrehmomente durch Steuerung der Drosselklappe bzw. Regelstange zugeordnet.

Mit Vorteil ist es dabei auch möglich, daß aus der Geschwindigkeit der Bewegung des Fahrpedals aus der Nullstellung in die erste zumindest annähernde Ruhestellung ein den Fahrstil des Fahrers angebender, z.B. die Schaltdrehzahlen und/oder Motordrehmomentgrenzen beeinflussender Fahrweiseparameter ermittelt wird. Aufgrund der ersten Ruhestellung kann auch die Motordrehzahl für den Anfahrvorgang festgelegt werden ; es können auch noch weitere, nachstehend zu erläuternde Vorgänge abhängig von diesem Fahrweiseparameter gesteuert werden.

An sich ist es möglich, eine Vielzahl unterschiedlicher Fahrweiseparameter, beispielsweise eine Kontinuierliche Wertreihe, z.B. auf Basis der ersten Ruhestellung und/oder der Geschwindigkeit der Fahrpedalbewegung, zu definieren ; es hat sich aber als ausreichend und im Hinblick auf die Vereinfachung der Steuerungsvorgänge zweckmäßig erwiesen, wenn nur zwei Fahrweiseparameter vorgesehen werden. Demgemäß ist es besonders vorteilhaft, wenn bei einer gemittelten Geschwindigkeit der Fahrpedalbewegung, die höher als ein vorgegebener Geschwindigkeitswert ist, ein Fahrweiseparameter für leistungsorientierte Fahrweise bestimmt wird, bei dem höhere Schaltdrehzahlen und/oder Motordrehmomentgrenzen festgelegt werden als bei einem ansonsten, bei einer gemittelten Geschwindigkeit der Fahrpedalbewegung kleiner als der vorgegebene Geschwindigkeitswert, bestimmten Fahrweiseparameter für verbrauchsoptimierte Fahrweise.

Da die Bewegungen des Fahrpedals laufend überwacht und selektiert werden, kann im Zuge dieser laufenden überwachung auch ohne weiteres der Fahrweiseparameter laufend aktualisiert werden, wozu es von besonderem Vorteil ist, wenn der Fahrweiseparameter nach jeder Bewegung des Fahrpedals in die Nullstellung und aus dieser in die erste zumindest annähernde Ruhestellung neu ermittelt wird.

Es ist auch günstig, wenn bei einer Bewegung des Fahrpedals in die Nullstellung im Falle von Gefällstrecken, solange die Motordrehzahl eine vorgegebene Mindestdrehzahl überschreitet, der ansonsten vorgesehene Auskupplungsvorgang unterdrückt wird, um damit ein Ansteigen der Fahrzeugbeschleunigung oder eine Verminderung der Fahrzeugverzögerung beim Zurücknehmen des Fahrpedals in die Nullage auszuschließen. Eine Gefällstrecke kann dabei von der Steuerung z.B. durch Abfragen, ob die zeitliche Änderung der Fahrgeschwindigkeit vor dem Auskupplungsvorgang größer als ein gangspezifischer verspeicherter negativer Parameterwert ist, oder ob während eines bereits eingeleiteten Auskupplungsvorganges die zweite Ableitung der Fahrzeuggeschwindigkeit nach der Zeit positiv wird, bestimmt werden.

Kommt es in diesem Fall der Unterdrückung des Auskupplungsvorganges zu einer Bremspedalbetätigung, so ist es weiters vorteilhaft, wenn nach Beendigung des Bremsvorganges und Freigabe des Bremspedals ein Auskupplungsvorgang ausgelöst wird, um auf Gefällstrecken Beschleunigungsvorgänge auch ohne Motorleistung zu ermöglichen. Damit kann auch hier eine Kraftstoffeinsparung erreicht werden.

Von Vorteil ist es aus Sicherheitsgründen weiters auch, wenn bei Bewegung des Fahrpedals aus der Nullstellung, mit unterdrücktem Auskupplungsvorgang, in die erste zumindest annähernde Ruhestellung unabhängig von dieser ansonsten die Gangwahl bestimmenden Ruhestellung ein Hochschaltvorgang unterdrückt wird.

Für einen willkürlichen Gangwechsel hinauf oder hinunter bei einer die Verkehrssituation im voraus überblickenden Fahrweise ist es von besonderem Vorteil, wenn eine Hin- und Herbewegung des Fahrpedals über einen vorgegebenen Mindesthub hinaus sowie innerhalb einer vorgegebenen Zeitspanne als willkürlicher Gangwechsel-Steuerbefehl erfaßt wird, wobei eine Rück- und Vorbewegung des Fahrpedals als Hochschalt-Steuerbefehl und eine Vor- und Rückbewegung des Fahrpedals als Rückschalt-Steuerbefehl erfaßt und ein Gangwechsel nach rechnerischer überprüfung der Zulässigkeit der Motordrehzahl im neuen Gang ausgelöst wird.

In entsprechender Weise kann bei einem Bremsvorgang mit Vorteil vorgesehen werden, daß die Bewegungsrichtungsänderungen des Bremspedals durch überwachung des Bremsdruckverlaufs erfaßt werden, und daß eine vorübergehende Druckreduzierung um einen vorgegebenen Mindestbetrag innerhalb einer vorgegebenen Zeitspanne als Hochschalt-Steuerbefehl und eine vorübergehende Druckerhöhung um einen vorgegebenen Mindestbetrag innerhalb einer vorgegebenen Zeitspanne als Rückschalt-Steuerbefehl selektiv erfaßt wird, wobei ein Gangwechsel nach rechnerischer überprüfung der Zulässigkeit der Motordrehzahl im neuen Gang ausgelöst wird.

Dabei ist es weiters aus Sicherheitsgründen, um ein Heißwerden der Bremsen zu verhindern, besonders günstig, wenn vor der Auslösung des Gangwechsels bei Erfassung eines Hochschalt-Steuerbefehls zusätzlich nach die Zulässigkeit des neuen Ganges in bezug auf die Bremstemperatur und/oder ein etwaiges Gefälle überprüft wird.

Eine im Hinblick auf die angestrebte Kraftstoffverbrauchsoptimierung besonders vorteilhafte Ausführungsform ist sodann dadurch gekennzeichnet, daß bei einem Bewegungsablauf des Fahrpedals, bei dem das Fahrpedal in eine vorgegebene, durch Wirksamwerden einer Kraftschwelle erkennbare Stellung bewegt und in dieser Stellung gehalten wird, gegebenenfalls bei einem Fahrweiseparameter für verbrauchsoptimierte Fahrweise, die Drasselklappe bzw. Regelstange in Entsprechung zur Motordrehzahl laufend so angesteuert wird, daß der für die jeweilige Motordrehzahl optimale spezifische Kraftstoffverbrauch gemäß dem Motorkennfeld erreicht wird. Dabei wird zweckmäßig vargesehen, daß fahrzeugspezifische, drehzahlabhängige Drosselklappenkennfelder abgespeichert werden, aufgrund deren von der Steuerung der Fahrpedalstellung an der Kraftschwelle der Motordrehzahl immer jene Drosselklappenöffnung zugeordnet wird, die bei der augenblicklichen Motordrehzal den optimal spezifischen kraftstoffverbrauch entsprechend dem ebenfalls verspeicherten Motorkennfeld sichert. Von der Steuerung werden dabei Rückschaltungen bei Fahrpedalstellungen bis zur Kraftschwelle unterdrückt, es sei denn, es wird eine als Funktion von Parametern bestimmte technische Motormindestdrehzahl unterschritten, oder es ist bei Vorhandensein einer "Tempomat"-Geschwindigkeitsregelung diese Geschwindigkeitsregelung aktiviert (bei der dann die Schaltvorgänge nicht unterdrückt werden). Hingegen ist es vorteilhaft, wenn bei einer Bewegung des Fahrpedals über die Kraftschwellen-Stellung hinaus den Fahrpedalstellungen kontinuierlich ansteigende Motormindestdrehzahlen zugeordnet werden, wobei diese kontinuierlich ansteigenden Motormindestdrehzahlen für die automatischen Rückschaltvorgänge vorgesehen und abgespeichert sind ; sie können dabei auch vom Fahrweiseparameter abhängig sein, wobei bei einem Fahrweiseparameter für leistungsorientierte Fahrweise die Motormindestdrehzahl bei ganz durchgetretenem Fahrpedal annähernd der Drehzahl bei Höchstleistung entsprechen kann.

Die erwähnte Kraftschwelle kann fest in bezug auf den Fahrpedalweg vorgesehen sein, und in diesem Fall ist es zweckmäßig, wenn zur Erzielung der Kraftschwelle für das Fahrpedal eine gesonderte Feder vorgesehen ist.

Eine hohe Kraftstoffeinsparung kann andererseits auch erzielt werden, wenn die Stellung, in der die Kraftschwelle wirksam wird, in Entsprechung zur Drosselklappen- oder Regelstangenstellung so verändert wird, daß bei der jeweiligen Motordrehzahl der optimale Motorwirkungsgrad erhalten wird. In diesem Zusammenhang wird zweckmäßig vorgesehen, daß zur Erzielung der Kraftschwelle für das Fahrpedal ein von der Prozessor-Steuereinheit angesteuerter Aktuator vorgesehen ist.

Von Vorteil ist es auch, wenn bei einer Rücknahme des Fahrpedals und Unterdrückung der automatischen Hochschaltvorgänge der laufend ungünstiger werdende Motorwirkungsgrad dem Fahrer durch Anlegen eines haptischen Signals, beispielsweise in Form von laufend stärker werdenden Impulsen oder Vibrationen, an das Fahrpedal signalisiert wird. In entsprechender Weise wird zweckmäßig vorgesehen, daß dem Fahrpedal zur Anlegung der haptischen Signale ein von der Prozessor-Steuereinheit angesteuerter elektromechanischer Antrieb, vorzugsweise ein Vibrator, zugeordnet ist. Sofern der oben erwähnte Aktuator (für die Kraftschwelle) vorhanden ist, kann mit Vorteil auch dieser Aktuator als Signalgeber für die haptischen Signale eingesetzt werden.

Diese haptischen Signale werden dann, wenn der Pedalweg Null ist, weiters, wenn bereits der höchste Gang eingelegt ist, und dann, wenn die Motordrehzahl bei der augenblicklichen Motortemperatur im höheren Gang für einen ruckfreien Betrieb bereits zu klein wird, unterdrückt.

Um den Fahrer nicht frühzeitig zu irritieren, ist es auch zweckmäßig, wenn das haptische Signal mit einer Zeitverzögerung an das Fahrpedal angelegt wird, wobei die Zeitverzögerung und/oder die Signalintensität gegebenenfalls abhängig von einem Fahrweiseparameter gewählt wird.

Eine vorteilhafte Ausführungsform des erfindungsgemäßen Verfahrens ist sodann dadurch gekennzeichnet, daß vor der selektiven Erfassung der vorgegebenen Bewegungsrichtungsänderungs-Abläufe jeweils auf das Vorliegen von Signalen von Sensoren für den Bremsdruck, für das Ansprechen des Bremspedals und für ein in seine Endstellung bewegtes Bremspedal geprüft wird, wobei bei Vorliegen derartiger Sensorsignale die selektive Erfassung der Bewegungsrichtungsänderungs-Abläufe des Fahrpedals unterdrückt wird und bei Talfahrten sowie gegebenenfalls in einem Geschwindigkeitsbereich oberhalb eines vorgegebenen Geschwindigkeitswertes bei heißen Bremsen auch in der Ebene Rückschaltvorgänge ausgelöst werden.

In entsprechender Weise ist eine Ausführungsform der erfindungsgemäßen Vorrichtung dadurch gekennzeichnet, daß die Prozessor-Steuereinheit an vorrangigen Eingängen mit einem Bremsdrucksensor, einem Bremspedal-Berührungssensor sowie einem die ganz durchgedrückte Position des Bremspedals erfassenden Sicherheits-Sensor verbunden ist.

Bei dieser Ausführungsform haben somit der Bremsdrucksensor, der Bremspedalansprech- oder -berührungssensor (der gleichzeitig der Bremslichtschalter sein kann) und aus Sicherheitsgründen für den Fall von Bremsversagern der Senor für das ganz durchgetretene Bremspedal grundsätzlich immer Vorrang gegenüber allen Fahrpedalsignalen, und aufgrund ihrer Signale werden bei Talfahrten sowie im hohen Geschwindigkeitsbereich bei heißen Bremsen auch in der Ebene Rückschaltvorgänge ausgelöst. Dabei ist es von besonderem Vorteil, wenn für die Auslösung der Rückschaltvorgänge der Motordrehzahlbpreich als Funktion des Bremsdruckes, der Fahrgeschwindigkeit, des bisher eingelegten Ganges, der Fahrzeugverzögerung und der Bremstemperatur rechnerisch ermittelt und anhand dessen der erforderliche Getriebegang festgelegt sowie die Zulässigkeit der Motordrehzahl im ermittelten Gang überprüft wird.

Vorzugsweise enthält die Prozessor-Steuereinheit einen an einen, feste Programmodule für die Erkennung bestimmter Bewegungsrichtungsänderungs-Abläufe enthaltenden Programmspeicher, z.B. in Form eines ROM's, angeschlossenen Prozessor.

Zusammenfassend ergibt sich somit, daß nach der Erfindung erstmals Hoch- und Rückschaltvorgänge vom Fahrer direkt und vollkommen unabhängig von der augenblicklichen Leistungsanforderung bzw. Drosselklappen- oder Reglerstangenstellung über das Fahrpedal bzw. das Bremspedal ausgelöst werden können. An die Eingriffsmöglichkeit über das Fahrpedal wird der Fahrer bei ungünstigem Motorwirkungsgrad überdies durch Vibration des Fahrpedals erinnert. Er kann dann, je nach dem in der Folge zu erwartenden Leistungsbedarf, praktisch im Unterbewußtsein entscheiden und reagieren. Diese Eingriffsmöglichkeit ist überdies deshalb von Bedeutung, weil erfindungsgemäß auch automatische Hochschaltvorgänge bei Rücknahme des Fahrpedals und sinkender oder gleichbleibender Fahrgeschwindigkeit grundsätzlich unterdrückt werden. Rückschaltvorgänge werden erst beim überschreiten einer Kraftschwelle am Fahrpedalweg ausgelöst.

In den Beschleunigungsphasen und bei Bergstrecken werden die Fahrpedalbewegungen des Fahrers einerseits durch die am Fahrpedalweg wirksam werdende Kraftschwelle beeinflußt, der programmgesteuert immer jene Stellung der Drosselklappe bzw. Regelstange zugeordnet wird, die bei der jeweiligen Motordrehzahl im Verbrauchsbestpunkt des Motorkennfeldes liegt; andererseits werden programmgesteuert haptische Signale ausgelöst, die am Fahrpedal für den Fahrer fallweise fühlbar werden und einen ungünstigen spezifischen Verbrauch wegen zu geringer Leistungsanfarderung signalisieren. Der Fahrer wird dann, wenn es die sich abzeichnende Verkehrslage bzw. Fahrsituatian angemessen erscheinen läßt, auf diese haptischen Signale reagieren und beispielsweise mit einer kleinen Pedalbewegung einen Hochschaltvorgang oder durch Rücknahme des Fahrpedals in die Nullage einen automatisierten Auskupplungsvorgang und damit eine Freilaufphase auslösen.

Für die Fahrphasen mit konstanter Geschwindigkeit ist eine Verschiebung des Bereiches größter Betriebshäufigkeit im Motorkennfeldbereich nur durch eine entsprechende Gangzahl und insbesonders bei PKW durch eine große Overdrivespreizung zu erreichen. Ohne besondere Vorkehrungen würde dabei aber die Schalthäufigkeit auf unakzeptable Werte steigen. Daher werden erfindungsgemäß programmgesteuert bei bestimmten Pedalbewegungen Schaltvorgänge, die bisher bei automatischen Getrieben entlang der üblichen adaptiven Schaltlinie ausgelöst werden, unterdrückt. Das gilt für die Hochschaltvorgänge bei Fahrpedalrücknahmebewegungen und die Rückschaltvorgänge bei Fahrpedalbewegungen im Bereich des Pedalweges bis zur Krafschwelle. Durch Fahrpedalbewegungen über die Kraftschwelle hinweg können jederzeit Rückschaltvorgänge ausgelöst werden.

Um auch in den übrigen Fahrphasen alle Möglichkeiten, Kraftstoff zu sparen, voll zu nutzen, wird in der Ebene in allen Gängen bei Rücknahme des Fahrpedals in die Nullage programmgesteuert ausgekuppelt und damit eine Freilaufphase eingeleitet, dagegen wird auf Gefällstrecken der Auskupplungsvorgang programmgesteuert unterdrückt und damit ohne jeden Fahrereingriff die Motorbremswirkung und die Schubabschaltung wirksam. Hingegen wird bei völliger Freigabe des Bremspedals nach einer Bremspedalbetätigung immer programmgesteuert ausgekuppelt; damit ist auf Gefällstrecken fallweise eine Fahrzeugbeschleunigung auch ohne Inanspruchnahme von Motorleistung möglich.

Kurzbescheibung der Zeichnung

Die Erfindung wird nachstehend anhand von bevorzugten Ausführungsbeispielen, auf die sie jedoch nicht beschränkt sein soll, und unter Bezugnahme auf die Zeichnung weiter erläutert, in der :

Fig. 1 schematisch einen Antriebsstrang eines Kraftfahrzeuges veranschaulicht ;

Fig. 2 schematisch, teilweise in einem Blockschaltbild, eine Vorrichtung zur Steuerung eines solchen Antriebstranges eines Kraftfahrzeuges zeigt ;

Fig. 3 in einem Diagramm die Verhältnisse bei einem Bewegungsablauf des Fahrpedals veranschaulicht, bei dem das Fahrpedal aus der Nullstellung in eine erste zumindest annähernde Ruhestellung bewegt wird ;

Fig. 4 ein Flußdiagramm für einen zugehörigen Programmodul zeigt, in dem die einzelnen Schritte bei einem Steuervorgang entsprechend dem Bewegungsablauf von Fig. 3 veranschaulicht sind ;

Fig. 5 ein anderes Diagramm eines Fahrpedal-Bewegungsablaufes zeigt, mit dem willkürlich ein Hochschaltvorgang ausgelöst werden kann ;

Fig. 6 ein zugehöriges Flußdiagramm zeigt, in dem die einzelnen Schritte zum selektiven Erfassen dieses Bewegungsablaufes gemäß Fig. 5 bis zum Auslösen des Hochschaltvorganges veranschaulicht sind ;

Fig. 7 ein der Fig. 5 ähnliches Diagramm zeigt, wobei jedoch ein Bewegungsablauf zum willkürlichen Auslösen eines Rückschaltvorganges gezeigt ist ;

Fig. 8 in einer der Fig. 6 entsprechenden Weise ein zur Fig. 7 gehöriges Flußdiagramm ist ;

Fig. 9 in einem kombinierten Diagramm die erforderliche Pedalkraft für das Fahrpedal über der Pedalstellung, mit einem gesonderten Schwellwert, sowie für eine bestimmte Motordrehzahl den Anstieg des spezifischen Kraftverbrauchs beim Zurücknehmen des Fahrpedals und den Wirkungsbereich eines Vibrators für diesen Fall veranschaulicht ;

Fig. 10 ein Diagramm zeigt, in dem ein Beispiel für fahrzeugspezifische, drehzahlabhängige Drosselklappenkennfelder veranschaulicht sind ;

Fig. 11 ein Beispiel für ein an sich herkömmliches Motorkennfeld für einen bekannten 21-16 Ventil-Motor zeigt, wobei das Kraftstoffeinsparpotential durch große Overdrivespreizung ($\varphi = 0,66$) ersichtlich ist ; und

Fig. 12 ein Flußdiagramm für einen Programmodul zum selektiven Erfassen eines Fahrpedal-Bewegungsablaufs beim Betätigen des Fahrpedals bis zum Schwellwert gemäß Fig. 9 und zum Ansteuern eines dem Fahrpedal zugeordneten Vibrators darstellt.

Beschreibung einer bevorzugten Ausführungsform

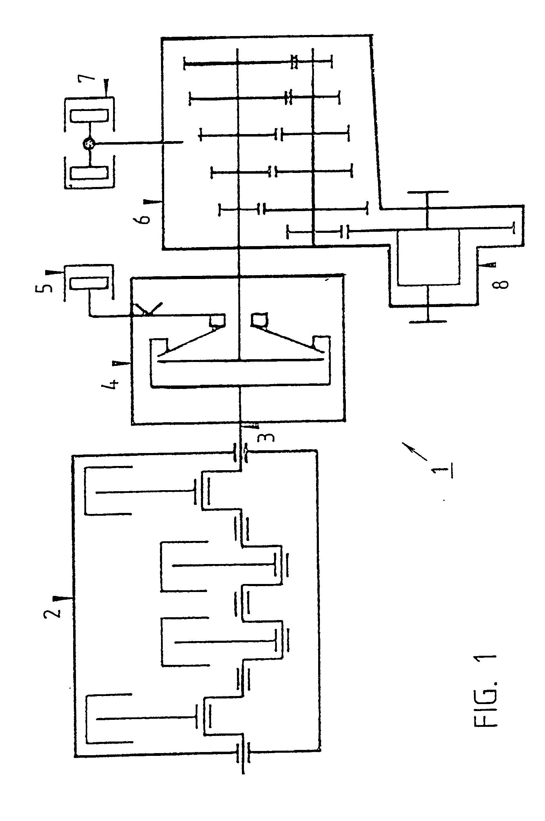

In Fig. 1 ist ein Antriebsstrang 1 eines Kraftfahrzeuges schematisch dargestellt. Dieser Antriebsstrang 1 enthält eine Brennkraftmaschine bzw. einen Motor 2, mit dessen Kurbelwelle 3 eine Kupplung 4 verbunden ist, die im vorliegenden Fall über einen pneumatischen Stellantrieb 5 automatisch betätigt wird. Auf die Kupplung 4 folgt abtriebsseitig ein automatisches Schaltgetriebe 6, dem eine pneumatische Servobetätigung 7 zugeordnet ist und über das das Drehmoment über ein Differentialgetriebe 8 auf Kraftfahrzeugräder (nicht gezeigt) übertragen wird.

Diese prinzipielle Antriebsstrang-Ausbildung mit z.B. einer pneumatischen Servoeinrichtung 5 für die kupplungsbetätigung sowie auch einer pneumatischen Servoeinrichtung 7 für die Getriebeschaltung ist an sich herkömmlich und bedarf deshalb keiner weiteren Erläuterung.

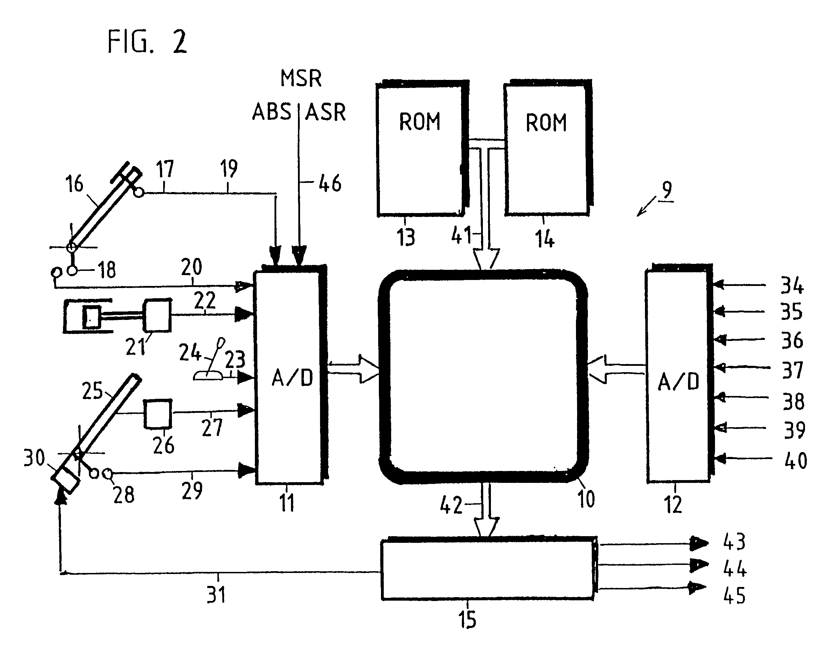

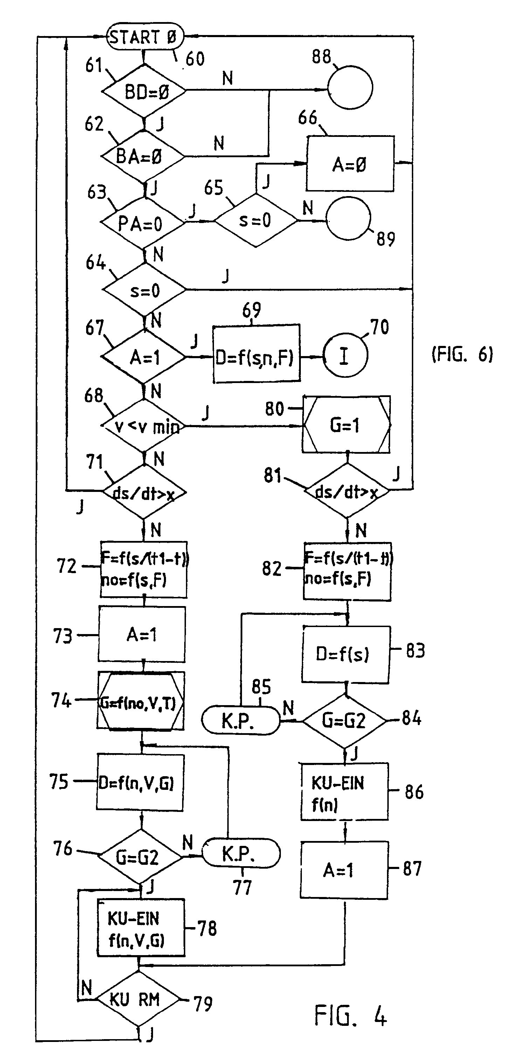

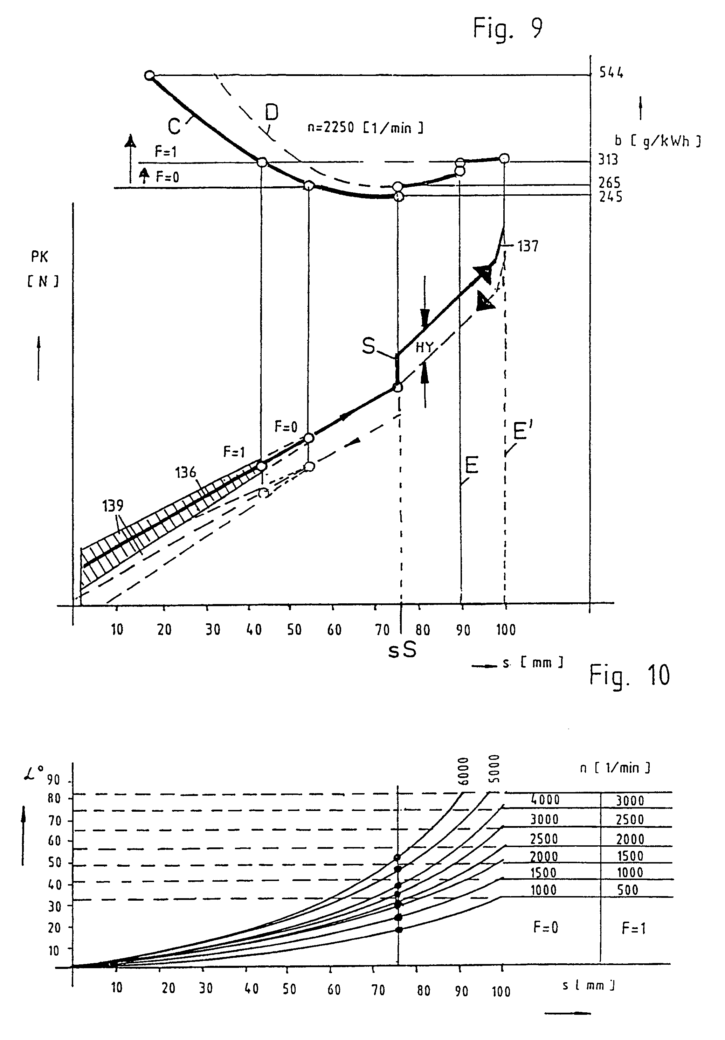

In Fig. 2 ist eine allgemein mit 9 bezeichnete Prozessor-Steuereinheit zur automatischen Steuerung eines solchen Antriebsstranges 1 (Fig. 1) schematisch veranschaulicht, wobei auch Anschlußleitungen zu — an sich herkömmlichen und daher nicht näher dargestellten — Sensoren bzw. Stellantrieben sowie ein Brems- und ein Fahrpedal schematisch dargestellt sind. Im einzelnen ist eine Prozessor-Steuereinheit 9 mit einem Mikroprozessor 10 veranschaulicht, der eingangsseitig an Analog/Digital-Wandler 11, 12 angeschlossen und überdies mit Speichern 13, 14, vorzugsweise ROM-Speichern, verbunden ist. Dabei sind im einen ROM, z.B. 13, fahrzeugspezifische Daten, d.h. Parameter bzw. kennwerte, nämlich insbesondere die sag. Motorkennfelder wie auch Drosselklappenkennfelder (etwa gemäß Fig. 10, wie nachstehend noch näher erläutert werden wird) gespeichert, wogegen im anderen ROM 14 feste Programmodule für den Ablauf der zu beschreibenden automatischen Steuerung (etwa gemäß den Flußdiagrammen nach Fig. 4, 6, 8 und 12) abgespeichert sind. Ausgangsseitig ist an den Mikroprozessor 10 ein Leistungselektronik-Ausgangskreis 15 angeschlossen, um die verschiedenen zu beschreibenden Ansteuerungen zu bewerkstelligen.

Die A/D-Wandler 11, 12 setzen die verschiedenen, von Sensoren, die einzelnen Fahrzeugkomponenten zugeordnet sind, kommenden analogen Signale in eine digitale Form um, mit einer entsprechenden Aufbereitung zur Verarbeitung durch den Mikroprozessor 10, wie dies an sich bekannt ist und hier keiner näheren Erläuterung bedarf.

Im einzelnen ist der A/D-Wandler 11 an einen einem Bremspedal 16 des Kraftfahrzeuges zugeordneten Bremspedalansprech- oder -berührungssensor 17 sowie an einen diesem Bremspedal 16 ebenfalls zugeordneten Sicherheitssensor 18, der den ganz durchgedrückten Zustand des Bremspedals 16 erfaßt, über Signalleitungen 19 bzw. 20 angeschlossen. Weiters ist der A/D-Wandler 11 mit einem Bremsdrucksensor 21 über eine Signalleitung 22 verbunden. Der A/D-Wandler 11 erhält auch über eine Leitung 23 ein Signal von einem Schalthebel 24 zugeführt, mit dem beispielsweise in an sich herkömmlicher Weise bestimmte Schalt-Vorgaben, etwa zum Anfahren oder zum Rückwärtsfahren, getroffen werden können.

In Fig. 2 ist sodann ein Fahrpedal 25 veranschaulicht, dessen Funktion als Leistungssteuerorgan zur Steuerung der Motorleistung auf elektronische Weise an sich bekannt ist. Dabei wird die Stellung des Fahrpedals 25 laufend von einem Geber 26, dem Leistungs-Sollwertgeber, erfaßt, und ein entsprechendes Signal wird von diesem Sollwertgeber 26 über eine Leitung 27 an einen weiteren Eingang des A/D-Wandlers 11 gelegt. Aus Sicherheitsgründen ist ferner ein die Null- oder Leerlaufstellung des Fahrpedals 25 erfassender Sensor 28 vorgesehen, der über eine Leitung 29 ein entsprechendes Nullstellungs-Signal an den A/D-Wandler 11 anlegt.

Dem Fahrpedal 25 ist weiters ein elektromechanischer Antrieb 30 zugeordnet, der ein haptisches Signal an das Fahrpedal 25 anlegen kann, und der vorzugsweise als Vibrator ausgebildet ist. Dieser Antrieb bzw. Vibrator 30 wird über eine Leitung 31 vom Ausgangskreis 15 her durch den Mikroprozessor 10 angesteuert, wie nachstehend anhand der Fig. 9, 10 und 12 noch näher erläutert werden wird.

Vom A/D-Wandler 11 gelangen die digitalisierten, aufbereiteten Signale über einen Bus 32 zum Mikroprozessor 10. In ähnlicher Weise erhält dieser Mikroprozessor 10 vom A/D-Wandler 12 digitalisierte Signale über einen Bus 33 zugeführt. Im einzelnen handelt es sich dabei um Signale, die von nicht näher veranschaulichten, herkömmlichen Sensoren, Fühlern usw. kommen, und zwar beispielsweise wie folgt :

```
Signalleitung 34 - Motordrehzahl n
Signalleitung 35 - Fahrgeschwindigkeit v
Signalleitung 36 - Gangkennung G
Signalleitung 37 - Motortemperatur T
Signalleitung 38 - Bremstemperatur
Signalleitung 39 - Kupplungs-Weggeber
Signalleitung 40 - Drosselklappen-Weggeber.
```

Im Mikroprozessor 10 werden die zugeführten Signale anhand der im ROM 14 abgespeicherten Programme unter Beiziehung der fahrzeugspezifischen bzw. motorspezifischen Kennfelder und Parameter verarbeitet, die im ROM 13 gespeichert sind, wobei die entsprechenden Daten und Programme über einen Bus 41 zum Mikroprozessor übertragen werden. Die im Rechner 10 auf diese Weise ermittelten Ergebnisse werden sodann über einen Bus 42 zum Ausgangskreis 15 übertragen, um über diesen, nach entsprechender Signalverstärkung, was aber in Fig. 2 nicht näher veranschaulicht ist, beispielsweise einen Drosselklappensteller (Signalleitung 43), einen Kupplungsservomotor (z.B. den Servoantrieb 5 gemäß Fig. 1) oder Pneumatikventile zur Kupplungsbetätigung (Signalleitung 44) bzw. die Gangsteuerung, etwa den Servoantrieb 7 gemäß Fig. 1, (Signalleitung 45) und gegebenenfalls den bereits erwähnten Fahrpedal-Vibrator 30 (Signalleitung 31) anzusteuern.

In Fig. 2 ist schließlich noch der Vollständigkeit halber ganz schematisch eine Signalleitung 46 für Signale von einem Antiblockiersystem (ABS), einer Antischlupfregelung (ASR) bzw. einer Motorschlupfregelung (MSR) schematisch veranschaulicht, wobei diese Signalleitung 46 zum A/D-Wandler 11 führt.

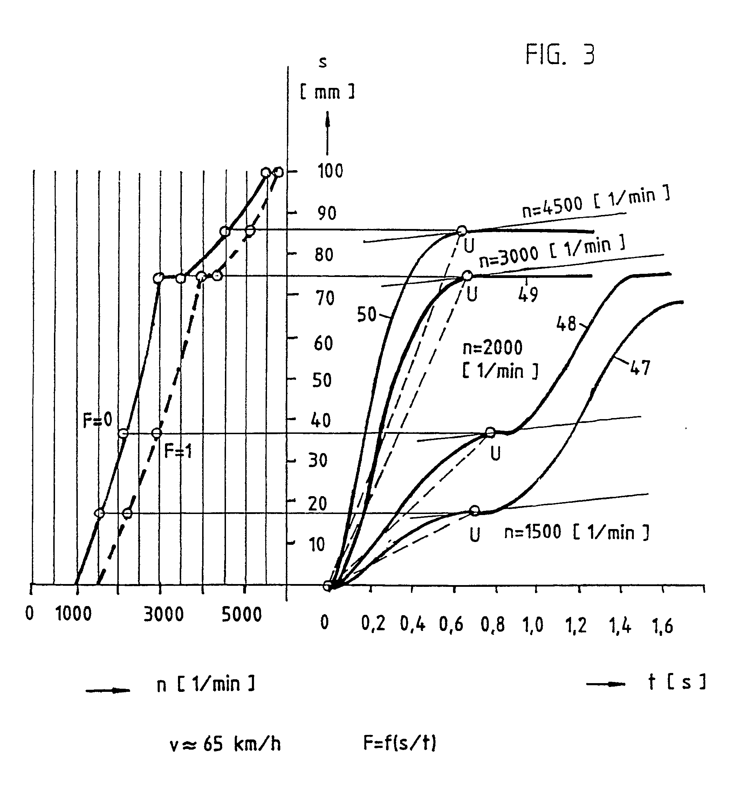

Die Steuereinheit 9 bzw. deren Rechner 10 ist im vorliegenden Fall nicht nur dafür ausgelegt, in herkömmlicher Weise, anhand der verspeicherten Kennfelder und Parameter, die Ansteuerungen des Getriebes und der Kupplung durchzuführen, sondern auch dazu, die Bewegungen des Fahrpedals 25 wie auch gegebenenfalls des Bremspedals 16 selektiv zu erfassen, d.h. bei Vorliegen bestimmter Bewegungsabläufe entsprechende Steuerungsvorgänge zu veranlassen. In den Fig. 3, 5 und 7 sind Beispiele für solche konkrete Fahrpedal-Bewegungsabläufe in Diagrammen veranschaulicht, wobei diese konkreten Bewegungsabläufe vom Mikroprozessor 10 bei der selektiven Erfassung als willkürliche Fahrerwünsche erkannt und als Befehlsignale verarbeitet werden, wie nachstehend noch näher erläutert werden wird.

In Fig. 3 ist in einem kombinierten Diagramm schematisch die Festlegung von Schaltdrehzahlen für einen Bewegungsablauf des Fahrpedals 25 (Fig. 2) veranschaulicht, bei dem das Fahrpedal 25 aus einer Nullstellung 0 (in die es zuvor zurück bewegt wurde) in eine erste annähernde Ruhestellung U bewegt wird. In Fig. 3 ist dabei in der rechten Diagrammhälfte der Weg s des Fahrpedals 25 über der Zeit t aufgetragen, wobei vier Beispiele für Bewegungen des Fahrpedals aus der Nullstellung 0 in die erste annähernde Ruhestellung U veranschaulicht sind. Dieser Bewegungsablauf, d.h. eine Bewegung des Fahrpedals zurück in die Nullstellung und sodann in eine erste ungefähr annähernde Ruhestellung U, wird in der Regel bei rollendem Fahrzeug stattfinden. Es ist aber an sich auch möglich, bei einem Anfahrvorgang die Schaltdrehzahlen bei der Anfahrbeschleunigung in Abhängigkeit von einer solchen ersten Betätigung des Fahrpedals festzulegen. Die erste zumindest annähernde Ruhestellung U des Fahrpedals ist dadurch gegeben, daß die Geschwindigkeit der Fahrpedalbewegung, $ds/dt$, einen bestimmten, vorgegebenen, im ROM 13 gespeicherten Wert oder Parameter x erreicht bzw. unter diesen Wert x fällt. Die Stellung s des Fahrpedals, wo die Geschwindigkeit der Fahrpedalbewegung kleiner wird als der Wert x, d.h. abs $(ds/dt) < x$, wird dabei erfaßt, und dieser Stellung ist gemäß abgespeicherten Kennlinien, für die Beispiele in der linken Diagrammhälfte von Fig. 3 angegeben sind, eine bestimmte Motordrehzahl n zugeordnet. Dabei können derartige Kennkurven s/n für verschiedene Fahrweiseparameter F abgespeichert sein. Im vorliegenden Ausführungsbeispiel sind zwei Kurven für zwei Fahrweiseparameter F = 0 (für verbrauchsoptimierte Fahrweise) bzw. F = 1 (für leistungsorientierte Fahrweise, gestrichelte Kurve in Fig. 3) veranschaulicht, es können jedoch mehrere Kurven, entsprechend mehreren Fahrweiseparametern, vorgesehen sein. Insbesondere ist es dabei auch möglich, den Fahrweiseparameter von der Steuereinheit 9 selbst auf jede Nullstellung des Fahrpedales 25 hin ermitteln zu lassen, und zwar dadurch, daß die mittlere Geschwindigkeit der Bewegung des Fahrpedals 25 aus der Nullstellung 0 in die erste Ruhestellung U errechnet und mit einem vorgegebenen Wert verglichen wird.

In Fig. 3 ist diese Abhängigkeit des Fahrweiseparameters F dadurch angedeutet, daß F als Funktion von s/t angeführt ist. Im Zeitraum von der Nullstellung 0 bis zum Ruhestellungs-Punkt U, dem Punkt, wo die Fahrpedalgeschwindigkeit von $ds/dt > x$ nach $ds/dt < x$ umschlägt (daher wird der Punkt U nachstehend auch als Umschlagpunkt bezeichnet), ist die Schaltkupplung 4 nicht aktiv, d.h. es ist in diesem Zeitraum ausgekuppelt, und es werden in dieser Zeit alle Steuersignale für die Gangsteuerung und Drosselklappensteuerung unterdrückt. Es wird jedoch bevorzugt, daß bereits während der Bewegung des Fahrpedals von 0 nach U die der jeweiligen Fahrpedalstellung s zugeordnete Motordrehzahl n abhängig vom Fahrweiseparameter F kontinuierlich angesteuert wird — spätestens aber im Zeitpunkt U wird diese zugehörige Motordrehzahl angesteuert, und es wird dann abhängig von der momentanen Fahrzeuggeschwindigkeit v (z.B. gemäß Fig. 3 ungefähr 65 km/h) der zugehörige Getriebegang ermittelt und der Schalt- und Einkupplungsvorgang ausgelöst, der dann automatisch und auf bekannte Weise abläuft. Beispielsweise ergibt sich bei diesem Vorgang für die in Fig. 3 unterste Bewegungskurve 47 zunächst ein Fahrweiseparameter F = 0 für verbrauchsoptimierte Fahrweise aufgrund der langsamen Geschwindigkeit, mit der das Fahrpedal aus der Stellung 0 in die Stellung U bewegt wird, und sodann wird entsprechend der erreichten Fahrpedalstellung s ($\approx$ 17 mm) aus dem Kennfeld (linke Diagrammhälfte in Fig. 3) die zugehörige Drehzahl n = 1500 1/min. ermittelt ; abhängig von der momentanen Fahrzeuggeschwindigkeit v ($\approx$ 65 km/h) wird sodann der zugehörige Getriebegang, im vorliegenden Beispiel der 5. Gang, ermittelt, wonach der Schalt-und Einkupplungsvorgang automatisch abläuft ; danach wird wiederum in herkömmlicher Weise die Motorleistung durch die Drosselklappenstellung (oder Regelstangenstellung), in primärer Abhängigkeit von der Fahrpedal-Stellung s, gesteuert.

In Fig. 3 sind sodann mit den weiteren Kurven 48, 49 und 50 für die Fahrpedalbewegung andere Möglichkeiten veranschaulicht, wobei sich bei der kurve 48 im Punkt U eine Drehzahl n = 2000 1/min ergibt, der entsprechend der 4. Gang ermittelt wird, wogegen der Kurve 49 im Punkt U eine Motordrehzahl n = 3000 1/min bzw. der 3. Getriebegang und der kurve 50 im Punkt U eine Motordrehzahl n = 4500 1/min bzw. der 2. Getriebegang zugeordnet werden.

Der vorgegebene Geschwindigkeitswert x für die Festlegung der ersten zumindest annähernden Ruhestellung wird fahrzeug- bzw. motorabhängig gewählt und als fester Parameter im ROM 13 abgespeichert ; im vorliegenden Ausführungsbeispiel kann dieser Wert x beispielsweise 5 mm/s betragen. Für die Festlegung dieses Wertes x ist dabei sicherlich auch mit ausschlaggebend, in welchem Ausmaß Fahrzeugerschütterungen zu einer überlagerung von ungewollten Bewegungen zur gewollten Bewegung des Fahrpedals aus der Nullstellung 0 in die Ruhestellung U führen können.

Anhand des in Fig. 4 veranschaulichten Flußdiagramms wird nun beispielsweise der Vorgang bei einer selektiven Erfassung eines solchen Bewegungsäblaufes gemäß Fig. 3, d.h. einer Bewegung des Fahrpedals 25 aus der Nullstellung 0 in die erste zumindest annähernde Ruhestellung U, erläutert. Das zugehörige Programm bzw. ein Programmodul (Programm 0) hiefür ist dabei im in Fig. 2 gezeigten Speicher bzw. ROM 14 abgespeichert, und dieser Programmodul wird vom Mikroprozessor 10 zyklisch, z.B. in Abständen von Zehntelsekunden, aufgerufen und abgearbeitet.

Gemäß Fig. 4 wird nach einem Start- und Initialisierschritt 60 als erstes abgefragt (Block 61), ob keine Bremspedalbetätigung (Sensor 17 bzw. 21 in Fig. 1) gegeben ist (BD = 0 ?). Wird keine Bremspedalbetätigung gemeldet, wird sodann beim Block 62 aus Sicherheitsgründen abgefragt, ob auch kein Signal vom Bremspedalendanschlag (Sensor 18 in Fig. 2) vorliegt (BA = 0 ?). Wenn die Antwort ebenfalls "ja" ist, d.h. keine Bremspedal-Endanschlagmeldung vorliegt, wird beim Block 63 sodann abgefragt, ob keine Fahrpedalbetätigung vorliegt (PA = 0 ?). Wenn das Ergebnis dieser Abfrage negativ ist, also eine Fahrpedalbetätigung vorliegt, geht das Programm bei der Abfrage nach dem Fahrpedalweg s = 0 ? (Sensor 28 in Fig. 1) gemäß Block 64 weiter, wie nachstehend erläutert wird.

Wenn bei der Abfrage 63 keine Fahrpedalbetätigung festgestellt wurde, wird danach ebenfalls — beim Block 65 -abgefragt, ob der Pedalweg s = 0 ist, und wenn ja, wird beim Block 66 ein parameter A für den Getriebegang gleich 0 gesetzt wobei auf Nicht-Gefällstrecken ausgekuppelt wird) und zum Startschritt 60 zurückgekehrt. Die Nullsetzung von A bedeutet, daß derzeit kein Getriebegang definiert ist.

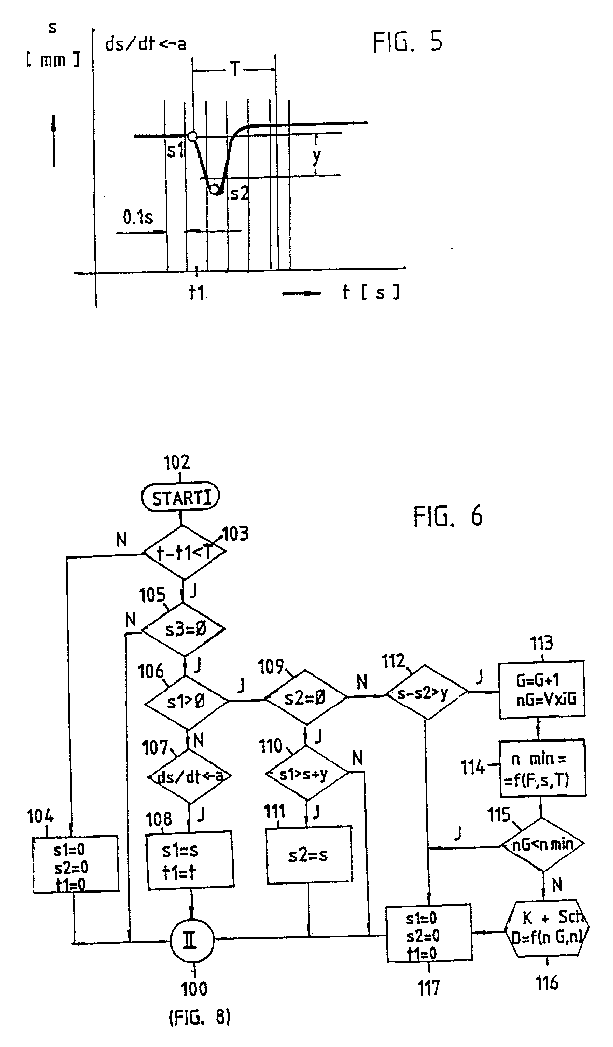

Ist das Ergebnis der Abfrage bei Block 64, ob der Weg s des Fahrpedals gleich D ist, positiv, d.h. es ist kein Fahrpedalweg erfaßt worden, so wird zum Startschritt 60 zurückgekehrt ; ist das Abfrageergebnis negativ, d.h. ist ein weg am Fahrpedal festzustellen, so erfolgt beim Block 67 eine Abfrage, ob bereits ein Getriebegang definiert ist (A = 1 ?). Ist dies nicht der Fall, so wird anschließend beim Block 68 abgefragt, ob die momentane Fahrzeuggeschwindigkeit unter einer vorgegebenen, verspeicherten Mindestgeschwindigkeit v min liegt. Ist jedoch A = 1, so wird beim Block 69 ein Signal für die Drosselklappen- oder Regelstangenstellung (Signal D) als Funktion des Pedalweges s, der Motordrehzahl n und des Fahrweiseparameters F definiert. Danachfolgt ein Unterprogramm I bei 70, wobei dieses Unterprogramm I nachstehend anhand der Fig. 6 noch weiter erläutert werden wird.

Ergibt sich bei der Abfrage gemäß Block 68 in Fig. 4, daß die Fahrzeuggeschwindigkeit v nicht unter dem vorgegebenen Mindestgeschwindigkeitswert v min liegt, so wird dann beim Block 71 abgefragt, ob die Pedalbewegungsgeschwindigkeit ds/dt größer als der vorgegebene Wert x ist. Solange dies zutrifft, solange befindet sich das Fahrpedal im Bewegungsablauf noch zwischen den Punkten 0 und U gemäß Fig. 3, und es wird daher zum Ausgang des programms 0, d.h. zum Startschritt 60, zurückgekehrt, und die vorstehend beschriebenen Programmschritte bzw. Abfragen wiederholen sich. Sobald ds/dt umschlägt, d.h. kleiner als x wird, geht das programm zum Schritt gemäß Block 72 über ; bei diesem Block 72 wird der Fahrweiseparameter F als Funktion der mittleren Fahrpedalbewegungsgeschwindigkeit s/(t1 – t) und im Anschluß daran der Motordrehzahlbereich nO als Funktion des Fahrpedalweges s und/oder des Fahrweiseparameters F bestimmt. Der Fahrweiseparameter F wird dabei beispielsweise durch Dividieren des Fahrpedalweges s im Punkt U gemäß Fig. 3 durch die bis dahin verstrichene Zeit, t1 – t, ermittelt.

Danach wird im Schritt 73 der Parameter A für die Getriebegangkennung gleich 1 gestellt, und aufgrund der im Punkt U (Schritt 71) erfolgten Ruhestellung des Fahrpedals und der zugehörigen Motordrehzahl nO wird sodann, in zusätzlicher Abhängigkeit von der Fahrzeuggeschwindigkeit v, im Schritt 74 ein Getriebegang definiert. Dabei wird auch überprüft, ob die sich ergebende Motordrehzahl über der bei der augenblicklichen Motortemperatur T und dem geforderten Motordrehmoment definierten technischen Mindestdrehzahl liegt. Sodann wird beim Block 75 das Motordrehmoment, d.h. die Drosselklappenstellung oder Regelstangenstellung, während des Schaltvorganges entsprechend dem zu schaltenden Gang (Gangkennung G), der augenblicklichen Fahrgeschwindigkeit v und der Motordrehzahl n gesteuert. Sodann wird bei 76 abgefragt, ob eine Rückmeldung, daß der Schaltvorgang abgeschlossen ist, vorhanden ist. Wenn nein, bleibt gemäß Schritt 77 die Kupplung noch ausgekuppelt, und es wird zum Block 75 zurückgekehrt. Wenn die Rückmeldung, daß der Schaltvorgang abgeschlossen ist, jedoch vorhanden ist, gelangt das Programm zum Block 77, gemäß welchem der Einkuppelvorgang abhängig vor der Motordrehzahl n, der Fahrgeschwindigkeit v und dem Getriebegang G in an sich herkömmlicher Weise gesteuert wird. Danach wird im Schritt 79 abgefragt, ob eine Rückmeldung für den beendeten Einkupplungsvorgang vorhanden ist. Wenn nein, wird zum Bloch 78 zurückgekehrt ; liegt jedoch diese Einkupplungsvorgang-Ende-Rückmeldung vor, wird zum Startschritt 60 zurückgekehrt. Der nach dem Bewegungsablauf gemäß Fig. 3 (der als willkürlicher, unmittelbarer Fahrerwunsch für eine Gangwahl selektiv erkannt wurde) erfolgte Schaltvorgang ist damit beendet.

Ergab sich bei der Abfrage gemäß Block 68, daß die momentane Fahrzeuggeschwindigkeit v unterhalb der vorgegebenen Mindestgeschwindigkeit v min liegt, so wird im Block 80 der erste Gang bzw. Anfahrgang als neuer Gang festgelegt und ein Schaltvorgang ausgelöst. Sodann wird beim Block 81 ähnlich wie beim Block 71 abgefragt, ob die Fahrpedalbewegungsgeschwindigkeit noch größer als der vorgegebene Wert x ist, und solange dies zutrifft, wird zum Startschritt 60 zurückgekehrt. Sobald die Fahrpedalbewegungsgeschwindigkeit ds/dt kleiner als x wird, wird nachfolgend gemäß Block 82 der Fahrweiseparameter (z.B. F = 0 für verbrauchsoptimierte Fahrweise bzw. F = 1 für leistungsorientierte Fahrweise) abhängig von der mittleren Geschwindigkeit, mit der das Fahrpedal aus dem Punkt 0 in den Punkt U gemäß Fig. 3 bewegt wurde, sowie weiters die Motordrehzahl nO als Funktion der Fahrpedalstellung s und des Fahrweiseparameters F festgelegt. Danach wird im Schritt 83 das Motordrehmoment während des Anfahrvorganges z.B. als Funktion der Fahrpedalstellung s und/oder des Fahrweiseparameters F gesteuert. Sodann wird beim Block 84 abgefragt, ob eine Rückmeldung für den eingelegten Gang vorhanden ist (G = G2). Wenn nein, wird wiederum, bei 85, die Kupplung ausgekuppelt gehalten und zum Schritt 83 zurückgekehrt. Wenn aber diese Rückmeldung für den eingelegten Gang vorliegt, wird wieder, ähnlich wie beim Schritt 78, gemäß Block 86 der Einkuppelvorgang drehzahlabhängig gesteuert. Sodann wird der Parameter A gemäß Block 87 auf 1 gestellt, da nun ein Getriebegang definiert ist. Schließlich wird beim Block 79, wie bereits vorstehend erläutert, wiederum abgefragt, ob der Einkupplungsvorgang beendet ist bzw. eine entsprechende Rückmeldung vorliegt, wonach zum Startschritt 60 zurückgekehrt wird.

Wie sich bereits aus den vorstehenden Darlegungen ergibt, ist der Programmablauf gemäß Fig. 4 ein allgemeiner Pragrammablauf, in dem vorrangig bestimmte Abfragen hinsichtlich Bremspedalbetätigung wie auch Fahrpedalbetätigung erfolgen und im Anschluß daran Detail- oder Unterprogramme abgearbeitet werden. Wie dabei bereits erläutert wurde, kann dabei abhängig von diesen Abfrageergebnissen bei 70 ein Unterprogramm I abgearbeitet werden, das in Fig. 6 in einem Flußdiagramm veranschaulicht ist, und das zur selektiven Erfassung eines konkreten Bewegungsablaufes bei der Fahrpedalbewegung gehört, wie er in Fig. 5 veranschaulicht ist. Dabei dient dieser in Fig. 5 veranschaulichte konkrete Bewegungsablauf dazu, einen willkürlichen Fahrerwunsch für ein Hochschalten zu erkennen und dementsprechend ein unmittelbares Fahrer-Gangwechselbefehlssignal zu erfassen.

Andere, hier nicht näher zu erläuternde Unterprogramme, die vom Programm 0 gemäß Fig. 4 gestartet werden, sind in Fig. 4 bei 88 (wenn eine Bremspedalbewegung festgestellt wurde) bzw. 89 (wenn keine Bremspedalbetätigung festgestellt wurde und widersprüchliche Fahrpedalbetätigungen gemeldet werden) veranschaulicht. Dabei kann es sich um Sicherheitsprogramme handeln, wobei beispielsweise bei 88, bei festgestellten Gefällstrecken oder bei hohen Geschwindigkeiten mit hohen Bremstemperaturen, Rückschaltvorgänge ausgelöst werden.

In Fig. 5 ist in einem Diagramm Fahrpedalweg s über der Zeit t ein weiterer konkreter, vorgegebener Bewegungsablauf dargestellt, nämlich ein kurzhubiger, kurzfristiger Bewegungshub des Fahrpedals zurück und wieder vor ; ein solcher FahrpedalRücknahmehub wird vom Programmodul als Hochschaltwunsch des Fahrers erkannt, und es wird unabhängig von der augenblicklichen Fahrpedalstellung bzw. Motorleistungsanforderung der Hochschaltvorgang nach rechnerischer überprüfung der technischen Zulässigkeit der Motordrehzahl im neuen Gang ausgelöst.

Dabei ist festzuhalten, daß die bisher üblichen vollautomatischen Hochschaltungen entsprechend den Schaltlinien, wie sie bei Automatikgetrieben bei Rücknahme des Fahrpedals und bei sinkender bzw. gleichbleibender Fahrzeuggeschwindigkeit vorgesehen waren, bei der vorliegenden Steuerung von der Steuereinheit 9 bzw. vom Programm grundsätzlich unterdrückt werden, vgl. auch nachstehende Ausführungen zu Fig. 9. Programmgesteuerte, selbsttätige Hochschaltungen entlang adaptiver Schaltkennlinien erfolgen nur dann, wenn entweder die verspeicherten gangspezifischen und adaptiven Fahrzeugmindestbeschleunigungen erreicht oder überschritten werden, oder wenn ein sogenannter "Tempomat" aktiviert ist, der an sich Stand der Technik ist und hier als bekannt vorausgesetzt wird.

In Fig. 5 ist gezeigt, wie beginnend bei einem Punkt s1, zum Zeitpunkt t1, das Fahrpedal 25 (Fig. 2) ruckartig zurückgenommen wird, wobei ein vorgegebener Mindesthub y überschritten wird, bis der Umkehrpunkt s2 erreicht ist, von dem an das Fahrpedal wieder vorbewegt wird, bis nach einer gewissen Mindestzeitspanne T (im in Fig. 5 gezeigten Ausführungsbeispiel bereits früher) wieder eine mehr oder weniger stabile Fahrpedalstellung nach Durchschreiten des vorgegebenen Mindesthubes y erreicht wird. Dieser Vorgang spielt sich dabei im Bereich von Zehntelsekunden, beispielsweise einer halben Sekunde, ab, und er wird von der Steuerung wie bereits erwähnt als willkürlicher Fahrerwunsch erkannt, einen Hochschaltvorgang auszulösen.

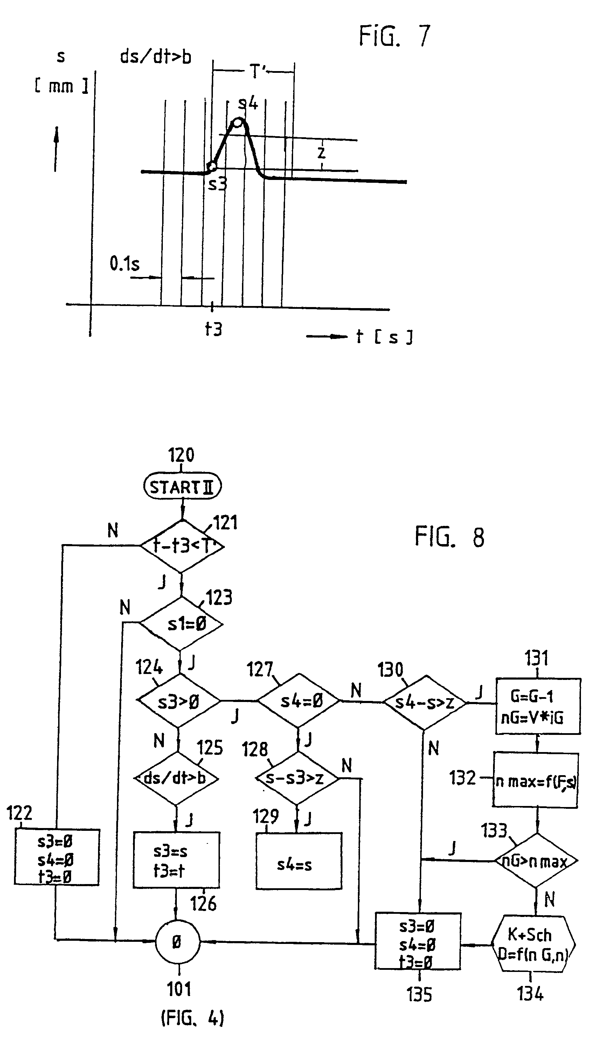

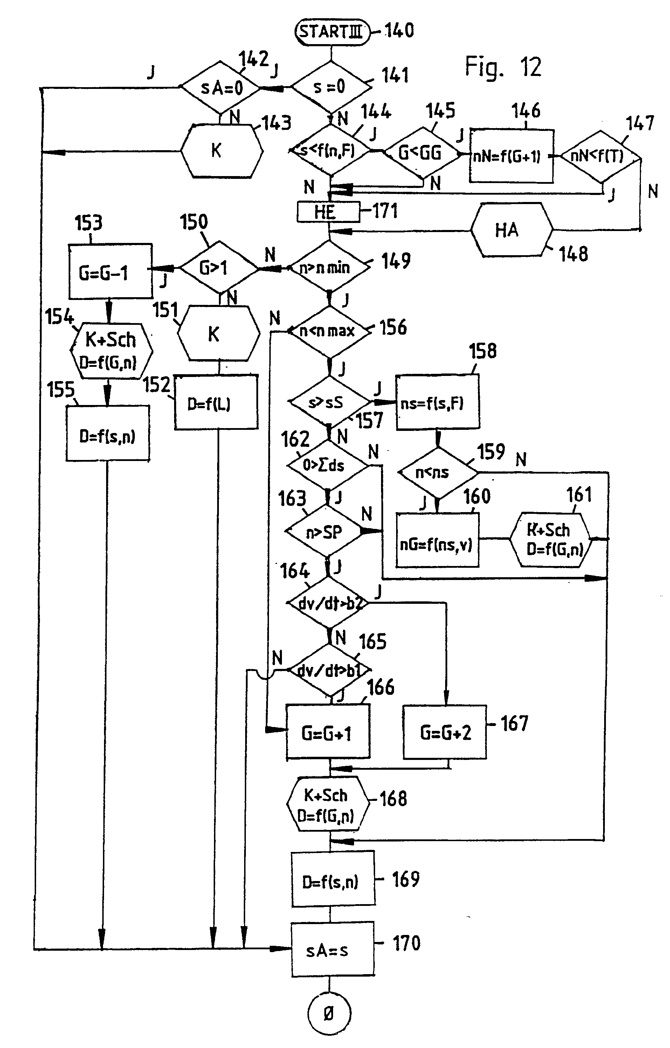

Das zugehörige Flußdiagramm ist wie erwähnt in Fig. 6 dargestellt, wobei ergänzend auszuführen ist, daß ein Unterprogramm II zu diesem Programmodul I gemäß Fig. 6 bei 100 aufgerufen wird und das aufgerufene Unterprogramm II jenes Programm ist, das in einem Flußdiagramm in Fig. 8 gezeigt ist und im einzelnen dann die Programmschritte im Fall eines Fahrpedal-Bewegungsablaufes für die Auslösung eines Rückschaltvorganges enthält. Von diesem Unterprogramm II gemäß Fig. 8 wird dann jeweils — bei 101 — zum Hauptprogramm 0 gemäß Fig. 4 zurückgekehrt. In einer Abwandlung kann nach dem Schritt 101, bevor zum Hauptprogramm gemäß Fig. 4 zurückgekehrt wird, ein weiteres Unterprogramm — nämlich jenes (III) nach Fig. 12, wie nachstehend noch erläutert werden wird — aufgerufen werden.

Gemäß Fig. 6 erfolgt auf den Startschritt 102 beim Block 103 eine Abfrage, ob das vorgegebene Zeitintervall T (siehe auch Fig. 5) noch nicht überschritten ist, d.h. ob (t – t1) < T ist. Wenn dies nicht zutrifft, d.h. die Zeitschranke T bereits überschritten ist, werden im Schritt 104 s1 = 0, s2 = 0 und t1 = 0 gesetzt, und es wird bei 100 der bereits erwähnte programmodul 11 gemäß Fig. 8 gestartet. Ist hingegen die Zeitschranke T noch nicht überschritten, d.h. (t – t1) < T, so wird gemäß Fig. 6 bei 105 abgefragt, ob ein Wert für einen Punkt s3 (gemäß Fig. 7 bzw. 8) noch verspeichert ist. Wenn nein, wird ebenfalls bei 100 zum Programmmodul II gemäß Fig. 8 weitergegangen. Ansonsten wird im Schritt 106 des Programmoduls I gemäß Fig. 6 in Anschluß an die vorherige Abfrage abgefragt, ob bereits ein Wert für s1 verspeichert ist, d.h. ob s1 > 0 ist. Wenn nein, wird bei 107 abgefragt, ob die momentane Geschwindigkeit der Fahrpedalbewegung in ausreichendem Maße negativ ist, d.h. ob ds/dt < -a ist, wobei a ein vorgegebener Mindestgeschwindigkeitswert ist. wird dieser Mindestgeschwindigkeitswert a nicht erreicht, d.h. ist die Fahrpedalgeschwindigkeit zu langsam, so wird zum Programmmodul II gemäß Fig. 8 weitergegangen. Im anderen Fall wird gemäß Block 108 in Fig. 6 nunmehr der erfaßte momentane Wert s für die Fahrpedalstellung als Wert für s1 abgespeichert, und ebenso wird die zugehörige Zeit t1 festgehalten, so daß der Punkt s1 gemäß Fig. 5 nunmehr als (möglicher) Anfangspunkt für einen als Hochschaltwunsch zu registrierenden Rücknahmeruck festgehalten ist. Danach wird über den Programmmodul II wieder zum Hauptprogramm 0 zurückgekehrt, von wo man bei 70 wieder zum Programmmodul I gemäß Fig. 6 gelangt.

Da nun ein Wert s1 > 0 vorliegt, ist jetzt, anders als zuvor, bei der Abfrage gemäß Block 106 das Ergebnis positiv, und demgemäß gelangt man in einem anderen Programmzweig zu einer Abfrage 109, ob bereits ein Wert s2 verspeichert ist. Ist dies nicht der Fall, d.h. ist die Antwort auf die Frage s2 = 0 ? "ja", so wird im nächsten Programmschritt bei 110 abgefragt, ob der augenblickliche Wert s für die Fahrpedalstellung zuzüglich dem vorgegebenen Mindesthub y noch kleiner als der zuvor verspeicherte Wert von s1 ist. Wenn dieser Mindesthub y noch nicht überschritten wurde, d.h. s1 noch größer als s + y ist, wird über den programmodul II und das Hauptprogramm 0 ein neuer Zyklus begonnen. Wenn der Mindesthub y bereits überschritten wurde, so wird nunmehr im Schritt 111 der momentane Wert s für die Fahrpedalstellung als Wert für s2 registriert. Beim nächsten Durchlaufen der Schleife wird bei der Abfrage 109 daher ein negatives Ergenis erhalten, so daß nun bei der Abfrage 112 fortgesetzt wird, ob nämlich bei der Rückkehrbewegung der vorgegebene Mindesthub y bereits überschritten wurde. Solange dies nicht der Fall ist, wird zyklisch über den Programmmodul II zum Programmstart zurückgekehrt. Sobald jedoch der Mindesthub y überschritten wird, wird beim Block 113 in Fig. 6 der neue Gang G als nächsthöherer Gang ermittelt, und ebenso wird die Motordrehzahl im neuen Gang, nG, errechnet. Danach wird gemäß Block 114 die augenblickliche technische Mindestdrehzahl des Motors, n min, als Funktion von F und s sowie z.B. aus der Motortemperatur T und der Drosselklappenstellung errechnet oder einem dafür verspeicherten Kennlinienfeld entnommen. Sodann wird bei 115 abgefragt, ob die Motordrehzahl nG im neuen Gang kleiner ist als die technische Mindestdrehzahl n min ; trifft dies nicht zu, so werden in einem Schritt 116 die Kupplungsbetätigung und der Schaltvorgang zum Einlegen des neuen Ganges ausgelöst, wobei während des Schaltvorganges die Motorleistung mit Hilfe der Drosselklappe entsprechend — abhängig vom neuen Gang nG und von der Drehzahl n — gesteuert wird (D = F(nG, n)). Danach oder im Fall, daß die Motordrehzahl im neuen Gang die technische Mindestdrehzahl unterschreitet, werden die Größen s1, s2 und t1 alle = 0 gesetzt (Block 117), und es wird zum Programmmodul II (bei 100) übergegangen.

In ganz ähnlicher Weise wird gemäß Fig. 7 ein kurzer Bewegungshub am Fahrpedal vor und zurück über einen bestimmten Mindesthub z hinaus als Fahrer-Rückschaltwunsch unabhängig von der Motordrehzahl und dem Motordrehmoment selektiv erkannt. Dabei wird wiederum zur Festlegung des Beginns des Pedalhubs (Punkt s3 zum Zeitpunkt t3) überprüft, ob die Geschwindigkeit, mit der das Fahrpedal 25 bewegt wird, einen bestimmten vorgegebenen Wert b überschreitet. Sodann wird überwacht, ob der Mindesthub z im Punkt s4, dem Umkehrpunkt bei der ruckartigen Pedalbewegung, überschritten wird, und ob bei der Rückbewegung des Fahrpedals ebenfalls dieser Mindesthub z überschritten wird ; ferner wird überprüft, ob diese ruckartige Fahrpedalbewegung innerhalb eines vorgegebenen Zeitintervalls T' vonstatten geht.

Der zugehörigen Programmmodul II ist in Fig. 8 veranschaulicht, wobei wie bereits erwähnt dieser Programmmodul bzw. dieses Unterprogramm an der Stelle 100 im Flußdiagramm gemäß Fig. 6 beginnt und mit einem Startschritt 120 startet. Bei 121 wird sodann überprüft, ob man sich noch innerhalb des vorgegebenen Zeitintervalls T' befindet, d.h. ob die Zeitschranke T' noch nicht überschritten wurde. Im Fall der Zeitschrankenüberschreitung werden in einem Block 122 die Größen s3 = 0, s4 = 0 und t3 = 0 gesetzt, und es wird bei 101 zum Hauptprogramm 0 zurückgekehrt.

Wenn bei einem folgenden zyklischen Durchlaufen des Unterprogramms II festgestellt wird, daß das Zeitintervall T' noch nicht überschritten wurde, d.h. (t – t3) < T' ist, so wird bei 123 abgefragt, ob bereits ein Wert für s1 (siehe Fig. 5 und 6) verspeichert wurde. Wenn die Antwort auf die Frage s1 = 0 ? "nein" ist, was bedeutet, daß bereits ein Wert s1 verspeichert wurde, wird ebenfalls bei 101 zum Hauptprogramm 0 gemäß Fig. 4 zurückgekehrt. Ansonsten wird in einem nächsten Schritt 124 abgefragt, ob ein Wert für s3 bereits verspeichert ist. Wenn dies nicht zutrifft, wird in einer Abfrage 125 geprüft, ob die Geschwindigkeit der Fahrpedalbewegung den vorgegebenen Mindestwert b überschreitet. Wenn dies nicht zutrifft, wird das Unterprogramm II wieder bei 101 abgeschlossen, und das Hauptprogramm 0 wird begonnen. Wenn die Fahrpedalgeschwindigkeit den Wert b jedoch überschreitet, wird nunmehr gemäß dem Block 126 in Fig. 8 der momentane Fahrpedalstellungswert s als Wert für s3 gespeichert, und die zugehörige Zeit t wird für die Beginnzeit t3 festgehalten. Danach wird ebenfalls ein neuer Zyklus für den Programmdurchlauf bei 101 begonnen, d.h. zum Hauptprogramm 0 gemäß Fig. 4 zurückgekehrt.

Im folgenden Durchlauf des Programmoduls II wird nunmehr bei der Abfrage 124 das Ergebnis positiv sein, und daher wird von da an der Programmablauf über einen anderen Zweig erfolgen, wobei als erstes bei 127 abgefragt wird, ob der Wert für den Umkehrpunkt s4 noch 0 ist. Wenn ja, wird bei 128 sodann abgefragt, ob beginnend bei s3 der Bewegungshub bei der Fahrpedalbewegung bereits den vorgegebenen Mindesthub z überschreitet, und sobald dies zutrifft, wird gemäß Block 129 der momentane Wert s als Wert für den Umkehrpunkt s4 registriert, und es wird zum Hauptprogramm zurückgekehrt (Feld 101). Wurde dagegen der Mindesthub z noch nicht überschritten, so wird sofort ein neuer Programmzyklus bei 101 eingeleitet.

Nach Setzen von s4 = s beim Block 129 wird im darauffolgenden Durchlauf des Programms bei 127 das Abfrageergebnis negativ sein, da ja nun s4 ungleich 0 ist, und es wird sodann bei 130 geprüft, ab bei der Rückkehrbewegung bereits der vorgegebene Mindesthub z überschritten wurde, d.h. ob (s4 − s) > z ist. Solange dies nicht der Fall ist, wird wieder zum Hauptprogramm 0 gemäß Feld 101 zurückgekehrt. Sobald jedoch der Mindesthub z überschritten wurde, wird beim Block 131 der neue Gang G (als der nächstniedrige Gang, G − 1) ermittelt, und die Motordrehzahl im neuen Gang, nG, wird errechnet. Sodann wird bei 132 die augenblickliche technische Maximaldrehzahl des Motors anhand von Parametern (z.B. Fahrweiseparameter F, Fahrpedalstellung s), z.B. auch in Abhängigkeit von der Motortemperatur, definiert. Im Anschluß daran wird bei 133 geprüft, ob die Motordrehzahl nG im neuen Gang größer ist als die soeben definierte technische Maximaldrehzahl nmax. Trifft dies nicht zu, werden anschließend (Schritt 134) die Kupplungsbetätigung und der Schaltvorgang in den neuen Gang ausgelöst ; dabei wird während des Schaltvorganges die Motorleistung über die Drosselklappenstellung entsprechend gesteuert. Ist jedoch die Drehzahl des Motors im neuen Gang größer als die technische Maximaldrehzahl, so wird kein Schaltvorgang ausgelöst, und die Größen s3, s4 und t3 werden gemäß Block 135 = 0 gesetzt, wonach bei 101 wieder zum Hauptprogramm 0 gemäß fig. 4 zurückgekehrt wird.

Die anhand der Fig. 5 und 6 einerseits bzw. 7 und 8 andererseits erwähnten vorgegebenen Werte für das Zeitintervall, T bzw. T′, für den Mindesthub, y bzw. z, sowie für die Mindestgeschwindigkeitswerte, a bzw. b, können an sich jeweils verschieden voneinander gewählt werden ; vorzugsweise werden sie jedoch gleich groß gewählt, d.h. T = T′, y = z und a = b ; diese Werte werden wieder abhängig vom fahrzeugtyp, Motor usw. gewählt, und beispielsweise beträgt T = T′ ungefähr 0,4 s, y = z ungefähr 0,5 bis 1,0 cm und a = b ist ungefähr gleich 20 mm/s.

Mit den Fahrpedal-Bewegungsabläufen gemäß fig. 5 bzw. Fig. 7 hat somit der Fahrer die Möglichkeit, jederzeit willkürlich einen Gangwechsel durch die entsprechende kurze hin- und hergehende fahrpedalbewegung auszulösen. Dabei erfolgt die Auslösung des Schaltvorganges immer erst nach der überprüfung der Ausführbarkeit, d.h. ob die Motordrehzahl im neuen Gang zulässig ist. Damit hat der Fahrer erstmals bei einem Automatikgetriebe die Möglichkeit, vorausschauend vorsorgliche Hoch- oder Rückschaltvorgänge unabhängig von der augenblicklichen Leistungsanforderung allein über das Fahrpedal auszulösen.

Üblicherweise wird bei einem als Leistungssteuerorgan vorgesenenen elektronischen Fahrpedal die pedalrückstellkraft von einer oder von zwei Federn aufgebracht, wobei sich ein linearer Anstieg der Pedalkraft PK mit zunehmendem Pedalweg s ergibt, wie in Fig. 9 in einem Diagramm bei 136 veranschaulicht ist. Weiters wird durch eine Reibscheibe eine Krafthysterese zur Stabilisierung der Pedalkraft erzeugt. Nahe dem Vollastpunkt ist dann beispielsweise eine Einrichtung für einen hohen Pedalkraftanstieg, eine Kraftschwelle für den sogenannten Kickdown, vorgesehen, wie in Fig. 9 bei 137 gezeigt ist.

Beim vorliegenden Ausführungsbeispiel ist gemäß Fig. 9 zusätzlich ungefähr am Beginn des letzten Viertels des Fahrpedalweges eine Kraftschwelle eingebaut, d.h. die erforderliche Pedalkraft zeigt an dieser Stelle der Kraftschwelle eine Stufe und sie steigt danach steiler an, was beispielsweise durch eine zusätzliche Feder, die ab dieser Fahrpedalstellung wirksam wird, erreicht wird. Diese Kraftschwelle ist in Fig. 9 schematisch bei S veranschaulicht. Die bei der Vor- und Rückwärtsbewegung des Fahrpedals gegebene Hysteresis ist in Fig. 9 weiters schematisch mit HY angegeben, wobei die Vorbewegung mit voll ausgezogenen Linien und die Rückbewegung mit gestrichelter Linie gezeigt ist.

Bei einer Bewegung des Fahrpedals an die Kraftschwelle S und Halten des Fahrpedals an der Kraftschwelle S wird bei der vorliegenden Steuerung ein Fahren bei optimalem Motorwirkungsgrad sichergestellt.

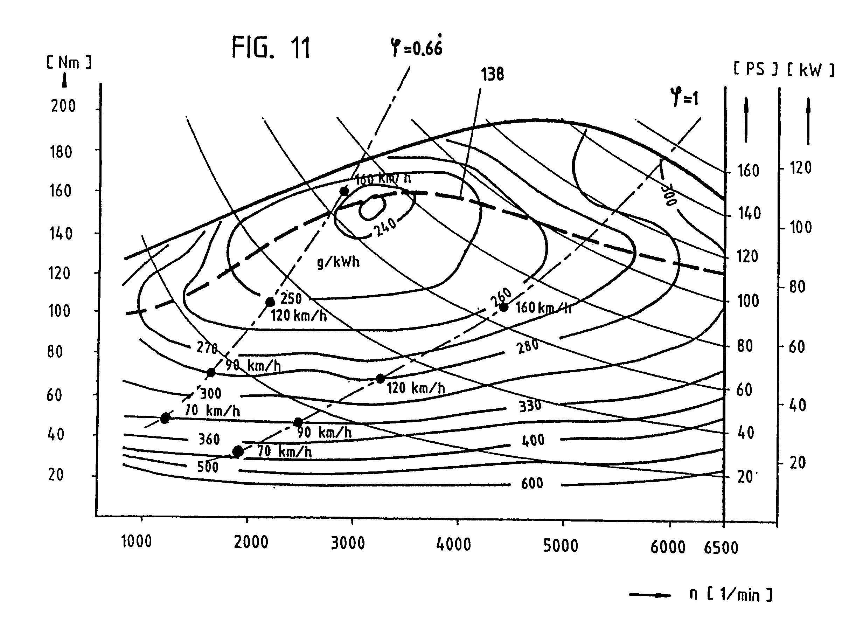

Dazu sind im ROM 13 fahrzeugspezifische drehzahlabhängige Drosselklappenkennfelder, wie in Fig. 10 dargestellt, abgespeichert, wobei diese Drosselklappenkennfelder so ausgelegt sind, daß der Fahrpedalstellung an der kraftschwelle S bei einem Fahrweiseparameter F = 0 (für verbrauchsoptimierte Fahrweise) immer jene Drosseltklappenstellung zugeordnet ist, die bei der augenblicklichen Motordrehzahl einen optimalen spezifischen Kraftstoffverbrauch (entsprechend der gestrichelten Linie 138 im Motorkennfeld gemäß Fig. 11, das ebenfalls im ROM 13 abgespeichert ist) erbringt. Bei Fahrpedalstellungen bis zur Kraftschwelle S werden durch die Steuerung bzw. das entsprechende Programm im ROM 14 Rückschaltungen unterdrückt, solange nicht eine technische Motormindestdrehzahl unterschritten wird ; diese technische Motormindestdrehzahl kann als Funktion von Parametern, wie z.B. der Motortemperatur T, bestimmt werden.

Im oberen Teil des Diagramms von Fig. 9 ist mit einer voll ausgezogenen Linie C weiters für eine bestimmte Motordrehzahl, z.B. n = 2250 1/min, der Anstieg des spezifischen Kraftstoffverbrauchs b (in g/kWh) beim Zurücknehmen des Fahrpedals 25 ohne Hysterese und mit gestrichelter Linie D der Anstieg des spezifischen Kraftstoffverbrauches b mit Hysterese veranschaulicht. Es ist dabei auch ersichtlich, daß bei der kraftschwelle S der minimale spezifische kraftstoffverbrauch b gegeben ist. An der Kraftschwelle S entspricht beispielsweise bei einem Fahrweiseparameter F = 0 die Fahrpedalstellung sS einer Motordrehzahl n = 3000 1/min bzw. bei einem Fahrweiseparameter F = 1 einer Motordrehzahl von n = 3500 1/min.

Bei einer Betätigung des Fahrpedals über diese Kraftschwelle S hinaus werden den Fahrpedalstellungen wie aus Fig. 9 ersichtlich kontinuierlich ansteigende Motormindestdrehzahlen für die automatischen Rückschaltvorgänge zugeordnet, wobei diese Mindestdrehzahlen im ROM 13 gespeichert sind und wieder vom Fahrweiseparameter F abhängig sein können ; beispielsweise entsprechen sie bei leistungsorientierter Fahrweise (Fahrweiseparameter F = 1) bei ganz durchgetretenem Fahrpedal annähernd der Drehzahl bei Höchstleistung. Im einzelnen ist in Fig. 9 beispielsweise veranschaulicht, daß einer Stellung, die durch die Linie E angegeben ist, eine Motordrehzahl n = 4000 bei F = 0 bzw. eine Motordrehzahl n = 4500 bei F = 1, und der voll durchgetretenen Fahrpedalstellung gemäß der Linie E' für F = 0 eine Motordrehzahl n = 5000 und für F = 1 eine Motordrehzahl n = 5500 1/min entspricht.

Wenn andererseits der Fahrer bei einem immer kleiner werdenden Leistungsbedarf, z.B. beim Bergabfahren, das Fahrpedal vom Schwellwert S immer weiter zurücknimmt, kommt der Motor wie erwähnt in Bereiche mit steigendem spezifischen Kraftstoffverbrauch b, d.h. mit fallendem Motorwirkungsgrad. Dies soll bei der vorliegenden Steuerung, bei der an sich Hochschaltvorgänge bei der Fahrpedalrücknahme nicht automatisch erfolgen, dem Fahrer durch Anlegen eines haptischen Signals, z.B. in Form von Vibrationen 139, an das Fahrpedal 25 signalisiert werden, wozu beispielsweise der in Fig. 2 gezeigte Vibrator 30 vorgesehen ist, der dann vom Mikroprozessor 10 über den Ausgangskreis 15 angesteuert wird. Dabei setzen die Vibrationen 139 am Fahrpedal 25 mit einer Verzögerung ein, die abhängig vom Fahrweiseparameter F gewählt werden kann — beispielsweise setzt im Fall eines Fahrweiseparameters F = 0 für verbrauchsorientierte Fahrweise das Vibrieren früher ein als im Fall des Fahrweiseparameters F = 1 für leistungsorientierte Fahrweise. Dabei ist es weiters zweckmäßig, wenn, wie in Fig. 9 schematisch durch die schraffierten Bereiche, die diese Vibrationen 139 veranschaulichen sollen, gezeigt ist, die Intensität der Vibrationen mit fallendem Motorwirkungsgrad ansteigt.

Diese Vibrationsauslösung wird aber von der Steuerung zweckmäßig in dem Fall unterdrückt, wenn bereits der höchste Gang eingelegt ist oder aber beim nächsthöheren Gang die der augenblicklichen Drosselklappenöffnung zugeordnete Mindestdrehzahl unterschritten wird.

Die Kraftschwelle S kann anstatt durch eine Feder auch durch einen vom Mikroprozessor 10 gesteuerten elektromotorischen Aktuator vorgesehen werden, wobei es in diesem Fall möglich ist, die Kraftschwelle S längs des Fahrpedalweges s zu verschieben. In diesem Fall werden die Drosselklappenöffnungen oder Regelstangenstellungen nicht oder praktisch nicht von der Motordrehzahl abhängig den Fahrpedalstellungen zugeordnet, vielmehr wird die kraftschwelle vom elektromotorischen Aktuator aufgrund der Ansteuerung durch den Mikroprozessor am Fahrpedalweg s immer dort festgelegt, wo beispielsweise beim Fahrweiseparameter F = 0 (also bei verbrauchsoptimierter Fahrweise) bei der jeweiligen Motordrehzahl der optimale Motorwirkungsgrad erreicht wird. Ein solcher Aktuator kann beispielsweise mit dem elektromechanischen Antrieb 30 gemäß Fig. 2 kombiniert sein, er kann jedoch, um etwaige Interferenzen zu vermeiden, als gesonderter Bauteil mit dem Fahrpedal 25 gekoppelt werden, was aber in der Zeichnung, Fig. 2, der besseren übersichtlichkeit wegen nicht veranschaulicht ist. Andererseits könnte im übrigen der elektromechanische Antrieb bzw. Vibrator 30 auch im dem Fahrpedal 25 zugeordneten Pedal-Sollwertgeber 26 integriert werden.

In Fig. 12 ist in einem Flußdiagramm ein programmodul III veranschaulicht, mit dem Fahrpedalbewegungen gemäß Fig. 9, insbesondere das Halten des Fahrpedals am Schwellenwert 140, erfaßt werden können, und mit dem weiters zeitverzögert beim Zurücknehmen des Fahrpedals 25 Vibrationen als haptische Signale 139 an das Fahrpedal angelegt werden, um den Fahrer dadurch zu signalisieren, daß der Motor in Bereiche mit steigendem spezifischen Kraftstoffverbrauch kommt. Wie bereits erwähnt kann dabei das Unterprogramm III im Anschluß an den Schritt 101 gemäß Fig. 8 durchlaufen werden, bevor zum Hauptprogramm 0 gemäß Fig.

4 zurückgekehrt wird (siehe auch das Ende des Flußdiagramms von Fig. 12).

Gemäß Fig. 12 erfolgt im Unterprogramm III nach einem Startschritt 140 bei 141 eine Abfrage, ob der Pedalweg s = 0 ist. Wenn ja, wird sodann bei 142 abgefragt, ob von einem vorhergehenden Programmdurchlauf ein vorhergehender Pedalweg s als letzter Wert sA noch gespeichert ist (sA = 0 ?). Trifft dies nicht zu, so wird gemäß Block 143 ein etwaiges haptisches Signal, das noch von früher her anliegt, beendet, und es wird, sofern keine Gefällstrecke vorliegt ausgekuppelt ; danach wird zum nachstehend noch erläuterten Schritt 170 weitergegangen. Ist jedoch der Pedalwegwert sA = 0, dann wird sofort zum Schritt 170 weitergegangen.

Wenn bei der Abfrage gemäß 141 das Ergebnis negativ war, d.h. ein Pedalweg s ≠ 0 vorliegt, so wird danach gemäß 144 abgefragt, ob dieser Pedalweg s kleiner ist als jener, bei dem bei der momentanen Motordrehzahl noch ein verbrauchsgünstiger Betrieb gegeben ist. Trifft dies zu, so wird danach bei 145 abgefragt, ob der momentane Gang G noch nicht der größte Gang GG ist. Ist noch nicht der größte Gang eingelegt, so wird gemäß Block 146 die Motordrehzahl nN für den nächsthöheren Gang (G + 1) errechnet, und danach wird bei 147 abgefragt, ob diese Motordrehzahl nN kleiner ist als die bei der momentanen Motortemperatur T noch zulässige Motordrehzahl. Trifft dies nicht zu, so wird gemäß Block 148 ein haptisches Signal (HA) mit einer Zeitverzögerung ausgelöst. Danach wird bei 149 abgefragt, ob die Motordrehzahl n noch größer ist als die technische Mindestdrehzahl nmin. Wenn das Ergebnis dieser Abfrage negativ ist, wird bei 150 sodann abgefragt, ob der momentane Gang G noch größer als der erste Gang ist, und wenn nein, wird bei 151 ausgekuppelt und bei 152 die Drosselklappe für einen Leerlauf angesteuert. Danach wird zum Schritt 170 weitergegangen.

Ist dagegen das Ergebnis der Abfrage 150 positiv, d.h. der momentane Gang ein höherer Gang als der erste Gang ist, so wird bei 153 der nächstniedrige Gang (G – 1) eingelegt, und bei 154 erfolgt die Ansteuerung für den kupplungsvorgang und das Schalten (K + Sch), und mit der Drosselklappe wird die neue Motordrehzahl angesteuert (D = f(G, n)). Sodann wird gemäß Block 155 die Drosselklappe als Funktion des Pedalweges s und der Motordrehzahl n nach dem Kennfeld gemäß Fig. 10 gesteuert.

Wenn bei der Abfrage 149 das Ergebnis positiv ist, d.h. die Motordrehzahl noch größer als die technische Mindestdrehzahl ist, so wird bei 156 dann abgefragt, ob die Motordrehzahl n noch kleiner als die technisch zulässige Maximaldrehzahl n max ist. Wenn ja, wird danach bei 157 abgefragt, ob der Pedalweg s größer ist als der Pedalweg sS beim Schwellwert S. Trifft dies zu, so wird bei 158 ein neuer Motordrehzahlbereich ns als Funktion des Pedalweges s und des Fahrweiseparameters F bestimmt. Danach wird bei 159 abgefragt, ob die Motordrehzahl kleiner als dieser neue Motordrehzahlbereich ns ist. Wenn ja, wird gemäß Block 160 aus der Fahrgeschwindigkeit v und dem Motordrehzahlbereich ns der neue Gang nG berechnet, und sodann wird gemäß Block 161 ein Kupplungs- und Schaltvorgang ausgelöst, ähnlich wie dies bereits vorstehend für den Block 154 erläutert wurde. In Anschluß daran wird zum nachstehend noch zu beschreibenden Block 169 weitergegangen.

Ist das Abfrageergebnis bei 159 negativ, so wird direkt zu diesem Block 169 übergegangen.

Wenn bei der Abfrage 157 der Pedalweg s kleiner oder gleich dem Pedalweg sS beim Schwellwert S ist, d.h. das Abfrageergebnis bei 157 negativ ist, so wird im Anschluß daran Lei 162 abgefragt, ob die Summe der letzten Pedalbewegungen positiv ist, d.h. keine Pedalrücknahmebewegung erfolgt ist. Bei negativem Abfrageergebnis (wenn also eine Pedalrücknahmebewegung erfolgt ist), wird ebenfalls zum Block 169 weitergegangen. Ansonsten wird bei 163 abgefragt, ob die Motordrehzahl n größer als im adaptiven Schaltpunkt SP vorgesehen ist. Wenn nein, wird ebenfalls zum Block 169 weitergegangen, ansonsten wird bei 164 abgefragt, ob die Beschleunigung dv/dt größer als ein gangspezifischer Wert b2 ist. Wenn ja, dann erfolgt gemäß Block 167 ein Hochschalten um zwei Gänge (G = G + 2), Ansonsten wird bei 165 abgefragt, ob die Beschleunigung dv/dt größer als ein gangspezifischer Wert b1 ist. Wenn nein, wird zum Block 170 weitergegangen, ansonsten wird beim Block 166 der nächsthöhere Gang (G + 1) als neuer Gang G festgelegt. Sodann erfolgt gemäß dem Block 168 wiederum der entsprechende Kupplungs- und Schaltvorgang, mit der entsprechenden Drosselklappensteuerung.

Danach wird gemäß Block 169 die Drosselklappe wieder nach dem Pedalweg s und der Motordrehzahl n (siehe Kennfeld von Fig. 10) gesteuert, und gemäß Block 170 wird der letzte Pedalweg als Wert sA gespeichert. Danach wird wieder zum Hauptprogramm 0 zurückgekehrt.

Im Fall, daß bei den Abfragen 144 oder 145 das Ergebnis negativ oder bei der Abfrage 147 das Ergebnis positiv war, wird vor der überprüfung der Motordrehzahl im Vergleich zur Mindestdrehzahl und Maximaldrehzahl (Abfragen 149 und 156) das zuvor bei einem Programmdurchlauf bereits ausgelöste haptische Signal beendet (HE beim Block 171).

Aus Fig. 4 ergibt sich, daß der Bremspedalansprech- oder -berührungssensor 17 (Fig. 2), der gleichzeitig der Bremslichtschalter sein kann, und aus Sicherheitsgründen, für den Fall von Bremsversagern, auch der Sensor 18 (Fig. 2) für ein ganz durchgetretenes Bremspedal immer Vorrang gegenüber allen Fahrpedalsignalen haben ; dies wird vorzugsweise auch entsprechend für den Bremsdrucksensor 21 (Fig. 2) vorgesehen, was in Fig. 4 allerdings nicht näher gezeigt ist — es wäre hiefür nur eine zusätzliche Abfrage ähnlich den Abfragen 61 und 62 im Programmodul einzubauen. Damit wird eine Fehlbedienung durch den Fahrer bei gleichzeitiger Betätigung von Fahrpedal und Bremspedal wirkungslos gemacht, da dann die Signale des Fahrpedals von der Steuerung ignoriert werden. Dabei wird zweckmäßig vorgesehen, daß bei einem Ausfall des Bremssystems, wenn das Bremspedal bis zum Anschlag durchgetreten wird (was vom Sensor 18 gemeldet wird), das Bremspedal-Endanschlagsignal automatisch einen Schaltvorgang in der Höchstdrehzahlbereich auslöst, um damit eine maximale Motorbremswirkung zu erzielen.

Auch können Rückschaltvorgänge immer dann ausgelöst werden, wenn sich das Fahrzeug auf einer Talfahrt befindet, oder wenn im hohen Geschwindigkeitsbereich gefahren wird und die Bremsen heiß werden. Dabei wird von der Steuerung gemäß einem zusätzlichen, nicht näher veranschaulichten Unterprogramm der für den Beladezustand oder das Gewicht des Fahrzeuges beim jeweiligen Gefälle, für die übernahme eines entsprechenden Anteiles der Bremsleistung notwendige Motordrehzahlbereich, z.B. als Funktion des Bremsdruckes, der Fahrgeschwindigkeit und der Fahrzeugverzögerung, weiters eines gangabhängigen fahrzeugspezifischen Parameters und der Bremstemperatur im Mikroprozessor 10 berechnet ; aufgrund dieser Berechnung wird der erforderliche Getriebegang festgelegt, und nach überprüfung der Zulässigkeit der Motordrehzahl im errechneten Gang, ähnlich wie dies anhand der Fig. 6 und 8 erläutert wurde, wird der Rückchaltvorgang ausgelöst, um so die gewünschte Motorbremsleistung zu erreichen. Bei höheren Bremstemperaturen wird dabei die Motordrehzahl für die Festlegung des Getriebeganges zusätzlich angehoben, um den Anteil der Bremsleistung durch den Motor zu erhöhen. Eine Gefällstrecke kann vom Mikroprozessor beispielsweise dadurch festgestellt werden, daß überprüft wird, ob die Änderung der Fahrzeuggeschwindigkeit in der Zeit, dv/dt, größer als ein gangspezifischer verspeicherter negativer parameterwert ist, oder aber dadurch, ob bereits während der Einleitung des Auskupplungsvorganges die zweite Ableitung der Fahrzeuggeschwindigkeit v nach der Zeit t positiv wird.

Eine derartige Feststellung von Gefällstrecken ist für den Fall von Bedeutung, daß bei Rücknahme des Fahrpedals in die Nullage vom Mikroprozessor 10 festgestellt wird, daß eine bestimmte Motormindestdrehzahl noch überschritten ist ; in diesem Fall wird der ansonsten normalerweise vorgesehene Auskupplungsvorgang unterdrückt, um damit ein Ansteigen der Fahrzeugbeschleunigung (bzw. eine Verminderung der Fahrzeugverzögerung) beim Zurücknehmen des Fahrpedals in die Nullage auszuschließen ; wird danach das Bremspedal betätigt und wieder freigegeben, so wird wie nach jeder Freigabe des Bremspedals ein Auskupplungsvorgang ausgelöst, um auf Gefällstrecken Beschleunigungsvorgänge auch ohne Motorleistung zu ermöglichen. Dies trägt ebenfalls zur kraftstoffeinsparung bei.

Im gerade beschriebenen Fall der Bewegung des Fahrpedals in die Nullage und Unterdrückung des Auskupplungsvorganges wird vorzugsweise, wenn unmittelbar vor einer neuen Fahrpedalbetätigung noch eine Fahrzeugbeschleunigung festgestellt wurde (dv/dt > 0), also auf einer Gefällstrecke, bei der das Fahrzeug bei dem bisher eingelegten Gang trotz des Motorschleppmomentes noch beschleunigte, unabhängig von dem ansonsten die Gangwahl bestimmenden ersten zumindest annähernden Ruhepunkt (U gemäß Fig. 3) des Fahrpedals 25 nach einer pedal-Nullage vom Mikroprozessor 10 (Fig. 2) ein etwaiger Hochschaltvorgang (aufgrund dieses punktes U) aus Sicherheitsgründen unterdrückt.

Mit Programmodulen ganz analog den anhand der Fig. 6 und 8 erläuterten kann schließlich der Mikroprozessor eine Steuerung des Antriebsstranges im Sinne von Auslösungen von Schaltvorgängen aufgrund von ruckartigen Bremspedalbetätigungen vorsehen. Dabei werden kurze Bremsdruckreduzierungen, also Bremspedalbewegungen über einen vorgegebenen Mindesthub hinaus sowie innerhalb einer vorgegebenen Zeitspanne, als Hochschalt-Befehlssignale des Fahrers selektiv erfaßt, und umgekehrt werden kurze Bremsdrucksteigerungen, also Vor- und Rückbewegungen des Bremspedals über einen Mindesthub hinaus sowie innerhalb einer vorgegebenen Zeitspanne, als Rückschalt-Steuerbefehle des Fahrers erkannt. Da die hiefür vorgesehenen Programmodule völlig analog den Programmodulen gemäß Fig. 6 und 8 sind, kann sich eine weitere Erläuterung hievon erübrigen. Selbstverständlich werden auch in diesem Fall der selektiven Erfassung von Bremspedalbewegungen die entsprechenden Schaltvorgänge erst nach überprüfung der Zulässigkeit der Motordrehzahl im neuen Gang sowie weiters, im Fall von Hochschaltvorgängen, auch nach überprüfung der Angemessenheit des neuen Ganges in bezug auf Gefälle und Bremstemperatur ausgelöst.

Damit werden dem Fahrer speziell auf Gefällstrecken auch während der Bremspedalbetätigung vorausschauende Schaltvorgänge ermöglicht.

Insgesamt ergibt sich somit beim beschriebenen Ausführungsbeispiel, daß abgesehen von den ohne Eingriff des Fahrers erfolgenden vollautomatischen Schaltvorgängen durch den Fahrer willkürlich Schaltvorgänge entweder durch kurze Hin- und Herbewegungen des Fahrpedals oder aber Bremspedals oder durch Zurücknehmen des Fahrpedals in die Nullstellung und anschließende Bewegung des Fahrpedals in eine ungefähre Ruhestellung ausgelöst werden. Andererseits werden die bisher üblichen automatischen Hochschaltvorgänge bei der Rücknahme des Fahrpedals unterdrückt, solange die Motordrehzahl unterhalb eines Grenzwertes bleibt, und der sich verschlechternde Motorwirkungsgrad wird dem Fahrer durch Anlegen eines haptischen Signals am Fahrpedal signalisiert, damit er entsprechend reagieren kann.

Es ergibt sich demgemäß eine Erhöhung der Fahrsicherheit durch die Freihaltung des visuellen Kanals des Fahrers für die Beobachtung des Verkehrsraumes und durch die Vermeidung der Notwendigkeit zur Beobachtung von optischen Anzeigen, wie beispielsweise Drehzahlmesser und Kraftstoffverbrauchsanzeiger, sowie durch die Automatisierung von Vorgängen und das Anlegen des haptischen Signals am Fahrpedal, was es erlaubt, rasch und sicher, ohne Beeinträchtigung der notwendigen Beobachtung des Verkehrsgeschehens, zu reagieren. Eine weitere Erhöhung der Sicherheit ergibt sich durch das automatische Zurückschalten bei Talfahrten und im hohen Geschwindigkeitsbereich, bei großen Bremsverzögerungen (bei Heißwerden der Bremsen) und letztlich auch beim Versagen der Betriebsbremse. Ein Ausfallen der Bremsen durch überhitzung wird dadurch praktisch ausgeschlossen. Ein weiterer Vorteil liegt in der Kraftstoffeinsparmöglichkeit durch das Vorsehen einer größeren Gangzahl mit extremer Overdrive-Spreizung und der automatischen verbrauchsoptimierten Gangwahl ; weiters ist auch vorteilhaft, daß die vorliegende Steuerung promlemlos an die verschiedensten Fahrzeugtypen und individuellen Anforderungen ohne Änderung der Elektronikbauteile, allein durch die Anpassung der ROMs 13 und 14 gemäß Fig. 2, angepaßt werden kann. Dadurch wird eine preiswerte Großserienproduktion der Elektronik ermöglicht. Damit wird in der Folge auch für leistungsschwächere Fahrzeuge, mit kleinem Hubraum, sowohl aus technischen Gründen (da keine Fahrleistung eingebüßt wird und auch kein wesentliches Mehrgewicht in kauf genommen werden muß) als auch aus preislichen Gründen eine Schaltautomatik mit der beschriebenen Steuerung realisierbar und sinnvoll.

Gewerbliche Anwendbarkeit

Die beschriebene Erfindung ist bei allen Kraftfahrzeugen, sowohl bei PKW als auch bei LKW, anwendbar. Die wirtschaftliche Voraussetzung ist durch ein positives Kosten-Nutzenverhältnis gegeben. Diese wird, insbesondere bei PKW, durch eine weitgehende Realisierung des Kraftstoff-Einsparpotentials bei Konstantfahrt durch Overdrivegänge und in Beschleunigungs- und Schubphasen durch die drehzahlabhängige verbrauchsoptimierte Steuerung der Drosselklappe bzw. Regelstange, den optimalen mechanischen Wirkungsgrad des Stirnradgetriebes und weitere Maßnahmen erreicht.

Wesentlich ist dabei auch, daß die Akzeptanz durch die Fahrer gesichert erscheint, da erstmals bei einem PKW-Automatikgetriebe gegenüber einem Handschaltgetriebe kein Leistungsverlust eintritt und erstmals vorausschauende korrektive Eingriffsmöglichkeiten des Fahrers bei der Gangwahl über das Fahrpedal möglich sind.

Durch die Möglichkeit der problemlosen Anpassung der erfindungsgemäßen Steuerung an verschiedenste Fahrzeugtypen ohne Änderung der Hardware, allein durch das Einlesen der verschiedenen Kennfelder und Parameter, sowie durch die steigende Leistungsfähigkeit der Mikroprozessoren und peripherbausteine ist eine Großserienproduktion zu marktakzeptablen Preisen problemlos möglich.

Bei LKW mit feinstufigen Vielgang-Automatik-Gruppengetrieben, wie sie bereits in Verwendung sind, kann damit einerseits auch bei rechnergesteuerter selbsttätiger Auslösung der Gangwechselvorgänge die Schalthäufigkeit auf das notwendige Maß reduziert werden, andererseits sind dem Fahrer erstmals vorausschauende Eingriffe in die Gangwahl über das Fahrpedal und auf Gefällstrecken mittels Bremspedal möglich. Dabei erfolgt bei Talfahrt die Auslösung der erforderlichen Rückschaltvorgänge und die Retarderbetätigung, wenn vom Fahrer nicht bereits vorausschauend ausgelöst, grundsätzlich vollautomatisch. Damit wird menschliches Fehlverhalten ausgeschlossen, was sicherlich insbesonders bei Omnibussen und schweren LKW-Zügen ein ganz wesentlicher Beitrag für die Verbesserung der Verkehrssicherheit ist.

## Patentansprüche

1. Verfahren zur Steuerung eines Antriebsstranges (1) für Kraftfahrzeuge mit einer elektronischen Motorleistungssteuerung, der ein Fahrpedal zur Betätigung einer Drosselklappe oder Regelstange zugeordnet ist, wobei die Stellung des Fahrpedals überwacht wird, mit einem Bremspedal (16), und mit einem Automatikgetriebe (6), z.B. einem automatischen Schaltgetriebe mit elektronisch gesteuerter mechanischer Trockenkupplung, anhand von Betriebsdaten, Kennwerten und Parametern, wobei bestimmte Pedalbewegungen als willkürliche Fahrer-Schaltbefehle bestimmt Pedalbewegungen als willkürlich Fahrer-Schaltbefehle erfaßt werden, dadurch gekennzeichnet, daß die Bewegungen des Fahrpedals (25) und/oder des Bremspedals (16) auf Bewegungsabläufe mit Änderungen in der Bewegungsrichtung laufend überwacht und bestimmte, vorgegebene Bewegungsrichtungsänderungs-Abläufe als unmittelbare Fahrer-Gangwahlsteuerbefehle selektiv erfaßt werden, wobei der jeweilige Getriebegang bzw. dessen Zulässigkeit anhand der Betriebsdaten und Parameter rechnerisch ermittelt bzw. überprüft und anschließend gegebenenfalls der Gangwechsel einschließlich der Kupplungsbetätigung ausgelöst und durch die Motorleistungssteuerung während des Gangwechselvorganges unabhängig von der Fahrpedalstellung die sich im neuen Gang ergebende Motordrehzahl (n) angesteuert wird, und daß andererseits automatische Hochschaltvorgänge infolge einer bloßen Rücknahme des Fahrpedals (25), solange die Motordrehzahl (n) unterhalb einer zulässigen Maximaldrehzahl bleibt, unterdrückt werden.

2. Verfahren nach Anspruch 1, dadurch gekennzeichnet, daß bei einem Fahrpedal-Bewegungsablauf, bei dem das Fahrpedal bei fahrendem Kraftfahrzeug in die Nullstellung (0) und aus dieser in eine erste zumindest annähernde Ruhestellung (U) gebracht wird, in der die Geschwindigkeit (ds/dt) der Fahrpedalbewegung einen vorgegebenen Wert (x) unterschreitet, der dieser Fahrpedal-Ruhestellung (U) zugeordnete Motordrehzahlbereich (nO) aufgrund von hiefür gespeicherten Kennwerten ermittelt wird, wobei beispielsweise bereits während der Pedalbewegung die der jeweiligen Fahrpedalstellung zugeordnete Motordrehzahl (n) kontinuierlich, spätestens aber im Augenblick der ersten Fahrpedal-Ruhestellung (U) angesteuert wird, und wobei abhängig von der momentanen Fahrzeuggeschwindigkeit (v) der zugehörige Getriebegang (G) ermittelt und der Schalt- und Einkupplungsvorgang ausgelöst wird, wonach die Motorleistung wieder durch die Drosselklappen- oder Regelstangenstellung primär abhängig von der Fahrpedal-Stellung (s) gesteuert wird.

3. Verfahren nach Anspruch 2, dadurch gekennzeichnet, daß aus der Geschwindigkeit der Bewegung des Fahrpedals (25) aus der Nullstellung (0) in die erste zumindest annähernde Ruhestellung (U) ein den Fahrstil des Fahrers angebender, die Schaltdrehzahlen und/oder Motordrehmomentgrenzen beeinflussender Fahrweiseparameter (F) ermittelt wird.

4. Verfahren nach Anspruch 3, dadurch gekennzeichnet, daß bei einer gemittelten Geschwindigkeit (s/(t1 – t)) der Fahrpedalbewegung, die höher als ein vorgegebener Geschwindigkeitswert ist, ein Fahrweiseparameter für leistungsorientierte Fahrweise (F = 1) bestimmt wird, bei dem höhere Schaltdrehzahlen und/oder Motordrehmomentgrenzen festgelegt werden als bei einem ansonsten, bei einer gemittelten Geschwindigkeit der Fahrpedalbewegung kleiner als der vorgegebene Geschwindigkeitswert, bestimmten Fahrweiseparameter für verbrauchsoptimierte Fahrweise (F = 0).

5. Verfahren nach Anspruch 3 oder 4, dadurch gekennzeichnet, daß der Fahrweiseparameter (F) nach jeder Bewegung des Fahrpedals (25) in die Nullstellung (0) und aus dieser in die erste zumindest annähernde Ruhestellung (U) neu ermittelt wird.

6. Verfahren nach einem der Ansprüche 1 bis 4, dadurch gehennzeichnet, daß bei einer Bewegung des Fahrpedals (25) in die Nullstellung (0) im Falle von Gefällstrecken, solange die Motordrehzahl (n) eine vorgegebene Mindestdrehzahl überschreitet, der ansonsten vorgesehene Auskupplungsvorgang unterdrückt wird.

7. Verfahren nach Anspruch 6, dadurch gekennzeichnet, daß im Fall einer Bremspedalbetätigung nach Beendigung des Bremsvorgangs und Freigabe des Bremspedals (16) ein Auskupplungsvorgang ausgelöst wird.

8. Verfahren nach Anspruch 6, dadurch gekennzeichnet, daß bei Bewegung des Fahrpedals (25) aus der Nullstellung (0), mit unterdrücktem Auskupplungsvorgang, in die erste zumindest annähernde Ruhestellung (U) unabhängig von dieser ansonsten die Gangwahl bestimmenden Ruhestellung ein Hochschaltvorgang unterdrückt wird.

9. Verfahren nach einem der Ansprüche 1 bis 8, dadurch gekennzeichnet, daß eine Hin- und Herbewegung des Fahrpedals (25) über einen vorgegebenen Mindesthub (y ; z) hinaus sowie innerhalb einer vorgegebenen Zeitspanne (T ; T') als willkürlicher Gangwechsel-Steuerbefehl erfaßt wird, wobei eine Rück- und Vorbewegung des Fahrpedals (25) als Hochschalt-Steuerbefehl und eine Vor- und Rückbewegung des Fahrpedals (25) als Rückschalt-Steuerbefehl erfaßt und ein Gangwechsel nach rechnerischer überprüfung der Zulässigkeit der Motordrehzahl (nG) im neuen Gang ausgelöst wird.

10. Verfahren nach einem der Ansprüche 1 bis 9, dadurch gekennzeichnet, daß die Bewegungsrichtungsänderungen des Bremspedals (16) durch überwachung des Bremsdruckverlaufs erfaßt werden, und daß eine vorübergehende Druckreduzierung um einen vorgegebenen Mindestbetrag innerhalb einer vorgegebenen Zeitspanne als Hochschalt-Steuerbefehl und eine vorübergehende Druckerhöhung um einen vorgegebenen Mindestbetrag innerhalb einer vorgegebenen Zeitspanne als Rückschalt-Steuerbefehl selektiv erfaßt wird, wobei ein Gangwechsel nach rechnerischer überprüfung der Zulässigkeit der Motordrehzahl im neuen Gang ausgelöst wird.

11. Verfahren nach Anspruch 10, dadurch gekennzeichnet, daß vor der Auslösung des Gangwechsels bei Erfassung eines Hochschalt-Steuerbefehls zusätzlich noch die Zulässigkeit des neuen Ganges in bezug auf die Bremstemperatur und/oder ein etwaiges Gefälle überprüft wird.

12. Verfahren nach einem der Ansprüche 1 bis 11, dadurch gekennzeichnet, daß bei einem Bewegungsablauf des Fahrpedals (25), bei dem das Fahrpedal in eine vorgegebene, durch Wirksamwerden einer Kraftschwelle (S) erkennbare Stellung (sS) bewegt und in dieser Stellung gehalten wird, gegebenenfalls bei einem Fahrweiseparameter (F) für verbrauchsoptimierte Fahrweise, die Drosselklappe bzw. Regelstange in Entsprechung zur Motordrehzahl (n) laufend so angesteuert wird, daß der für die jeweilige Motordrehzahl optimale spezifische Kraftstoffverbrauch (b) gemäß dem Motorkennfeld erreicht wird.

13. Verfahren nach Anspruch 12, dadurch gekennzeichnet, daß die Stellung, in der die Kraftschwelle (S) wirksam wird, in Entsprechung zur Drosselklappen — oder Regelstangenstellung so verändert wird, daß bei der jeweiligen Motordrehzahl (n) der optimale Motorwirkungsgrad erhalten wird.

14. Verfahren nach Anspruch 12, dadurch gekennzeichnet, daß bei einer Bewegung des Fahrpedals (25) über die Kraftschwellen-Stellung (sS) hinaus den Fahrpedalstellungen kontinuierlich ansteigende Motormindestdrehzahlen zugeordnet werden.

15. Verfahren nach einem der Ansprüche 1 bis 14, dadurch gekennzeichnet, daß bei einer Rücknahme des Fahrpedals (25) und Unterdrückung der automatischen Hochschaltvorgänge der laufend ungünstiger werdende Motorwirkungsgrad dem Fahrer durch Anlegen eines haptischen Signals, beispielsweise in Form von laufend stärker werdenden Impulsen oder Vibrationen, an das Fahrpedal signalisiert wird.

16. Verfahren nach Anspruch 15, dadurch gekennzeichnet, daß das haptische Signal mit einer Zeitverzögerung an das Fahrpedal (25) angelegt wird, wobei die Zeitverzögerung und/oder die Signalintensität gegebenenfalls abhängig von einem Fahrweiseparameter (F) gewählt wird.

17. Verfahren nach einem der Ansprüche 1 bis 16, dadurch gekennzeichnet, daß vor der selektiven Erfassung der vorgegebenen Bewegungsrichtungsänderungs-Abläufe jeweils auf das Vorliegen von Signalen von Sensoren (21, 17, 18) für den Bremsdruck, für das Ansprechen des Bremspedals (16) und für ein in seine Endstellung bewegtes Bremspedal geprüft wird, wobei bei Vorliegen derartiger Sensorsignale die selektive Erfassung der Bewegungsrichtungsänderungs-Abläufe des Fahrpedals (25) unterdrückt wird und bei Talfahrten sowie gegebenenfalls in einem Geschwindigkeitsbereich oberhalb eines vorgegebenen Geschwindigkeitswertes bei heißen Bremsen auch in der Ebene Rückschaltvorgänge ausgelöst werden.

18. Verfahren nach Anspruch 17, dadurch gekennzeichnet, daß für die Auslösung der Rückschaltvorgänge der Motordrehzahlbereich als Funktion des Bremsdruckes, der Fahrgeschwindigkeit (v), des bisher eingelegten Ganges (G), der Fahrzeugverzögerung (dv/dt) und der Bremstemperatur rechnerisch ermittelt und anhand dessen der erforderliche Getriebegang festgelegt sowie die Zulässigkeit der Motordrehzahl (n) im ermittelten Gang überprüft wird.

19. Vorrichtung zur Durchführung des Verfahrens nach einem der Ansprüche 1 bis 18, mit zumindest einem, einem Fahrpedal (25) als leistungssteuerorgan zugeordneten, dessen Stellung erfassenden Sollwertgeber (26) für die Fahrleistung, mit dem eine Prozessor-Steuereinheit (9) verbunden ist :ur Ermittlung eines geeigneten Ganges und zur automatischen Steuerung von Gangwechselvorgängen, wobei die Prozessor-Steuereinheit (9) weiters eingangsseitig mit einer Speichereinrichtung (13) für Kenndaten des Kraftfahrzeuges, mit zumindest einem dem Bremspedal (16) zugeordneten Sensor (17, 18, 21) und mit Betriebsdaten, wie Motordrehzahl (n), Fahrgeschwindigkeit (v), Kupplungsstellung und Gangkennung (G), erfassenden Sensoren sowie ausgangsseitig mit einem Ausgangskreis (15) zur Ansteuerung des Getriebes (6), der Kupplung (4) und der Motor-Drosselklappe bzw.-Regelstange verbunden ist, Dadurch gekennzeichnet, daß die Prozessor-Steuereinheit (9) ein Modul (14, 10) zur laufenden überwachung der Bewegung des Fahrpedals (25) und/oder des Bremspedals (16) auf Bewegungsabläufe mit Änderungen in der Bewegungsrichtung und selektiven Erfassung bestimmter, vorgegebener Bewegungsrichtungsänderungs-Abläufe als unmittelbare Fahrer-Gangwahlsteuerbefehle enthält.

20. Vorrichtung nach Anspruch 19, dadurch gekennzeichnet, daß die Prozessor-Steuereinheit (9) einen an einen, feste Programmodule für die Erkennung bestimmter Bewegungsrichtungsänderungs-Abläufe enthaltenden Programmspeicher (14), z.B. in Form eines ROM's, angeschlossenen Prozessor (10) enthält.

21. Vorrichtung nach Anspruch 19 oder 20, zur Durchführung des Verfahrens nach Anspruch 2, dadurch gekennzeichnet, daß dem Fahrpedal (25) ein gesonderter die Fahrpedal-Nullstellung erfassender Sensor (28) zugeordnet ist.

22. Vorrichtung nach einem der Ansprüche 19 bis 21, zur Durchführung des Verfahrens nach Anspruch 17, dadurch gekennzeichnet, daß die Prozessor-Steuereinheit (9) an vorrangigen Eingängen mit einem Bremsdrucksensor (21), einem Bremspedal-Berührungssensor (17) sowie einem die ganz durchgedrückte Position des Bremspedals (16) erfassenden Sicherheits-Sensor (18) verbunden ist.

23. Vorrichtung nach einem der Ansprüche 19 bis 22, zur Durchführung des Verfahrens nach Anspruch 12, dadurch gekennzeichnet, daß zur Erzielung der Kraftschwelle (S) für das Fahrpedal (25) eine gesonderte Feder vorgesehen ist.

24. Vorrichtung nach einem der Ansprüche 19 bis 23, zur Durchführung des Verfahrens nach Anspruch 12 oder 13, dadurch gekennzeichnet, daß zur Erzielung der Kraftschwell (S) für das Fährpedal (25) ein von der Prozessor-Steuereinheit (9) angesteuerter Aktuator vorgesehen ist.

25. Vorrichtung nach einem der Ansprüche 19 bis 24, zur Durhführung des Verfahrens nach Anspruch 11, dadurch gekennzeichnet, daß dem Fahrpedal (25) zur Anlegung der haptischen Signale ein von der Prozessor-Steuereinheit (9) angesteuerter elektromechanischer Antrieb, vorzugsweise ein Vibrator (38), zugeordnet

EP 0 380 564 B1

ist.

## Claims

1. A method of controlling a drive train (1) for motor vehicles comprising an electronic engine power control which has an associated accelerator pedal for the actuation of a throttle valve or control rod, the position of the accelerator pedal being monitored, a brake pedal (16) and an automatic transmission (6), e.g. an automatic gear shifting mechanism including an electronically controlled mechanical dry clutch, on the basis of operating data, characteristic values and parameters, wherein certain pedal movements are detected as arbitrary gear shifting instructions from the driver, characterized in that the movements of the accelerator pedal (25) and/or the brake pedal (16) are continuously monitored for motion sequences including changes in the direction of movement and certain, predetermined motion direction change courses are selectively detected as direct gear selection control instructions from the driver, with the respective gear and its permissibility being calculatively determined and checked on the basis of the operating data and parameters, whereupon the change of gears, if occasion arises, including actuation of the clutch is initiated and, during the gear changing process, the engine power control system brings the engine to the number of engine revolutions (n) resulting for the new gear independently of the position of the accelerator pedal, and in that, on the other hand, automatic upshifting processes due to merely a release of the accelerator pedal (25) are suppressed as long as the number of engine revolutions (n) remains below a permissible maximum number of revolutions.

2. A method according to claim 1, characterized in that, in an accelerator pedal motion sequence in which the accelerator pedal, with the motor vehicle moving, is brought into the zero position (0) and from this zero position into a first at least approximate rest position (U) in which the velocity (ds/dt) of the accelerator pedal movement falls below a predetermined value (x), the engine speed range (nO) associated with this accelerator pedal rest position (U) is determined on the basis of characteristic values stored for this purpose, with the number of engine revolutions (n) associated with the respective accelerator pedal position being approached continuously, for example, already during the pedal movement but not later than at the moment of the first accelerator pedal rest position (U) and, in dependence on the momentary vehicle speed (v), the associated gear (G) is determined and the shifting and clutch engagement process is initiated, whereafter the engine power is again controlled by the position of the throttle or control rod primarily in dependence on the accelerator pedal position (s).

3. A method according to claim 2, characterized in that a driving mode parameter (F) which indicates the driving style of the driver and influences the number of revolutions at which shifting takes place and/or the engine torque limits is determined from the velocity of the movement of the accelerator pedal (25) out of the zero position (0) into the first at least approximate rest position (U).

4. A method according to claim 3, characterized in that if the averaged velocity (s/(t1 − t)) of the accelerator pedal movement is greater than a predetermined velocity value, a driving mode parameter for power oriented driving (F = 1) is determined at which higher numbers of revolutions for shifting and/or critical engine torques are determined than for another driving mode parameter for consumption optimized driving (F = 0) which is determined if the averaged velocity of the accelerator pedal movements is lower than the predetermined velocity value.

5. A method according to claim 3 or 4, characterized in that the driving mode parameter (F) is determined anew after each movement of the accelerator pedal (25) into the zero position (0) and out of this zero position into the first at least approximate rest position (U).

6. A method according to anyone of claims 1 to 4, characterized in that, if the accelerator pedal (25) moves into the zero position (0) due to downhill travel, the otherwise provided clutch disengagement process is suppressed as long as the number of engine revolutions (n) exceeds a predetermined minimum number of revolutions.

7. A method according to claim 6, characterized in that, in the case of brake pedal actuation, after the end of the braking process and release of the brake pedal (16), a clutch disengagement process is initiated.

8. A method according to claim 6, characterized in that, if the accelerator pedal (25) is moved from the zero position (0), with the clutch disengagement process suppressed, into the first at least approximate rest position (U), an upshifting process is suppressed independently of the fact that this rest position would otherwise determine the gear selection.

9. A method according to anyone of claims 1 to 8, characterized in that a back and forth movement of the accelerator pedal (25) beyond a predetermined minimum distance (y ; z) and within a predetermined period of time (T ; T′) is detected as an arbitrary gear change control instruction, with a backward and forth movement of the accelerator pedal (25) being detected as an upshift control instruction and a forward and back movement

20

of the accelerator pedal (25) being detected as a downshift control instruction, and a gear change being initiated after a calculative check of the permissibility of the number of engine revolutions (nG) in the new gear.

10. A method according to anyone of claims 1 to 9, characterized in that changed in the direction of movement of the brake pedal (16) are sensed by monitoring the course of the brake pressure, and in that a temporary reduction in pressure by a predetermined minimum amount within a predetermined time period is selectively detected as an upshift control instruction and a temporary pressure increase by a predetermined mimimum amount within a predetermined period of time is selectively detected as a downshift control instruction, with a change in gears being initiated after a calculative check of the permissibility of the number of engine revolutions in the new gear.

11. A method according to claim 10, characterized in that, before the actuation of a change in gears when an upshift control instruction has been detected, the permissibility of the new gear with respect to the brake temperature and/or a possible downgrade is additionally determined.

12. A method according to anyone of claims 1 to 11, characterized in that, in the case of a motion sequence of the accelerator pedal (25) where it is moved into a predetermined position (sS) which can be perceived by a force threshold (S) becoming effective and is held in such a position, possibly with a driving mode parameter (F) for consumption optimized driving, the throttle or control rod is continuously actuated in correspondence with the number of engine revolutions (n) so that the optimum specific fuel consumption (b) for the respective number of engine revolutions according to the engine characteristics is realized.

13. A method according to claim 12, characterized in that the position in which the force threshold (S) becomes effective is changed in correspondence with the throttle or control rod position so that optimum engine efficiency is realized at the respective number of engine revolutions (n).

14. A method according to claim 12, characterized in that, if the accelerator pedal (25) moves beyond the force threshold position (sS), continuously increasing minimum engine revolution numbers are associated with the accelerator pedal positions.

15. A method according to anyone of claims 1 to 14, characterized in that, if the accelerator pedal (25) is released and automatic upshift processes are suppressed, the continuously less favourable engine efficiency is signaled to the driver by the application of a haptic signal, for example in the form of continuously increasing pulses or vibrations, to the accelerator pedal.

16. A method according to claim 15, characterized in that the haptic signal is applied to the accelerator pedal (25) with a time delay, with such time delay and/or the signal intensity being possibly selected in dependence on a driving mode parameter (F).

17. A method according to anyone of claims 1 to 16, characterized in that, before selectively sensing the predetermined motion sequences including changes in the direction of movement, a check is made as to the presence of signals from sensors (21, 17, 18) for the brake pressure, for the response of the brake pedal (16) and for the brake pedal that has been moved into its end position, with the presence of such sensor signals causing the selective sensing of motion sequences including changes in the direction of movement of the accelerator pedal (25) to be suppressed and downshifting processes to be initiated during downhill travel, and possibly also on level ground within a speed range above a predetermined speed value if the brakes are hot.

18. A method according to claim 17, characterized in that, for the initiation of downshift processes, the engine speed range is calculated as a function of the brake pressure, the vehicle speed (v), the gear (G) previously employed, the vehicle deceleration (dv/dt) and the brake temperature, and the required transmission gear is determined on the basis of these calculations while the permissibility of the number of engine revolutions (n) in the determined gear is examined.

19. An apparatus for carrying out the method according to anyone of claims 1 to 18, including at least one set-point adjuster (26) for the driving power which is associated with an accelerator pedal (25) serving as power control member and senses the position of said accelerator pedal, and is connected with a processor control unit (9) for determining a suitable gear and for automatically controlling gear shifting processes, with the processor control unit (9) being connected at is input with a memory device (13) for characteristic data for the motor vehicle, with at least one sensor (17, 18, 21) associated with the brake pedal (16) and with other sensors for picking up operating data such as the number of engine revolutions (n), driving speed (v), position of clutch and gear identification (G) while its output is connected with an output circuit (15) for controlling the transmission (6), the clutch (4) and the engine throttle or control rod, characterized in that the processor control unit (9) comprises a module (14, 10) for continuously monitoring the movements of the accelerator pedal (25) and/or the brake pedal (16) for motion sequences including changes in the direction of movement and selectively detecting certain predetermined motion sequences including changes in the direction of movement as direct gear selection control instructions from the driver.

20. An apparatus according to claim 19, characterized in that the processor control unit (9) includes a processor (10) which is connected to a program memory (14), e.g. in the form of a ROM, including fixed program modules for detecting certain motion sequences that include changes in the direction of movement.

21. An apparatus according to claim 19 or 20, for carrying out the method according to claim 2, characterized in that the accelerator pedal (25) has an associated separate sensor (28) which senses the zero position of the accelerator pedal.

22. An apparatus according to anyone of claims 19 to 21, for carrying out the method according to claim 17, characterized in that the processor control unit (9) is connected, at priority inputs, with a brake pressure sensor (21), a brake pedal contact sensor (17) and a safety sensor (18) which senses the completely depressed position of the brake pedal (16).

23. An apparatus according to anyone of claims 19 to 22, for carrying out the method according to claim 12, characterized in that a separate spring is provided to realize the force threshold (S) for the accelerator pedal (25).

24. An apparatus according to anyone of claims 19 to 23, for carrying out the method according to claim 12 or 13, characterized in that an actuator which is controlled by the processor control unit (9) is provided to realize the force threshold (S) for the accelerator pedal (25).

25. An apparatus according to anyone of claims 19 to 24, for carrying out the method according to claim 15, characterized in that the accelerator pedal (25) has an associated electromechanical drive, preferably a vibrator (30), controlled by the processor control unit (9) for application of the haptic signals.

## Revendications

1. Procédé de commande d'une ligne de transmission (1) pour véhicules comportant une commande électronique de puissance de moteur à laquelle est associée une pédale d'accélérateur pour l'actionnement d'une vanne d'étranglement ou d'une tige de réglage, la position de la pédale d'accélérateur étant surveillée, une pédale de frein (16) et une transmission automatique (6), par exemple une boîte de vitesse automatique à embrayage mécanique à sec commandé de manière électronique, au moyen de données de fonctionnement, de valeurs caractéristiques et de paramètres, des déplacements définis de la pédale étant saisis en tant qu'ordres volontaires de changement de vitesse émis par le conducteur, caractérisé en ce que les déplacements de la pédale d'accélérateur (25) et/ou de la pédale de frein (16) sont constamment surveillés quant à des séquences de mouvement comportant des modifications du sens de mouvement, et des séquences définies, prédéterminées de modification de sens de mouvement sont détectées sélectivement en tant qu'ordres immédiats de commande de choix de vitesse par le conducteur, la vitesse actuelle ou son caractère acceptable sont déterminés par calcul à l'aide des données de fonctionnement et des paramètres et vérifiées et ensuite le changement de vitesse, y compris l'actionnement de l'embrayage est éventuellement déclenché, et la vitesse de rotation du moteur (n) qui apparaît dans la nouvelle vitesse est commandée par la commande de puissance du moteur, pendant le processus de changement de vitesse, d'une façon indépendante de la position de la pédale d'accélérateur, et que d'autre part, des passages automatiques en vitesse supérieure, par suite d'un simple rappel de la pédale d'accélérateur (25) est éliminé tant que la vitesse de rotation du moteur (n) reste au-dessous d'une vitesse de rotation maximale admissible.

2. Procédé selon la revendication 1, caractérisé en ce que, dans une séquence de déplacement de la pédale d'accélérateur dans laquelle la pédale d'accélérateur est amenée dans la position nulle (0) lorsque le véhicule roule et est ensuite amenée à partir de celle-ci dans une première position au moins voisine de la position de repos (U), dans laquelle la vitesse (ds/dt) du déplacement de la pédale d'accélérateur est inférieure à une valeur prédéterminée (x), la zone de vitesse de rotation (nO) associée à cette position de repos (U) de la pédale d'accélérateur est déterminée sur la base des caractéristiques mémorisées à cet effet, la vitesse de rotation (n) associée à la position respective de pédale d'accélérateur étant, par exemple, commandée déjà de façon continue pendant le déplacement de la pédale, mais au plus tard à l'instant de la première position de repos (U) de la pédale d'accélérateur, et le rapport de vitesse associée (G) étant déterminé en fonction de la vitesse instantanée du véhicule (v) et le processus de passage de vitesse d'embrayage est déclenché à la suite de quoi, la puissance du moteur est principalement commandée en fonction de la position (s) de la pédale d'accélérateur à l'aide des positions de vanne d'étranglement ou de tige de réglage.

3. Procédé selon la revendication 2, caractérisé en ce qu'un paramètre (F) de mode de conduite indiquant l'arrêt par le conducteur, influençant les vitesses de rotation et/ou les limites de moment de rotation est déterminé à partir de la vitesse de mouvement de la pédale d'accélérateur (25) à partir de la position nulle (0) vers la première position au moins voisine de la position de repos (U).

4. Procédé selon la revendication 3, caractérisé en ce que, pour une vitesse moyenne (s/(t1 − t)) du mouvement de la pédale d'accélérateur, qui est supérieure à une valeur de vitesse prédéterminée, il est défini un paramètre de mode de conduite pour un mode de conduite oriente selon la puissance (F = 1) dans laquelle sont définies des vitesses de rotation de passage de vitesse et/ou des limites de moment de rotation de moteur qui sont plus élevées que pour un paramètre de mode de conduite (F = 0) destine à un mode de conduite optimisé, défini pour une vitesse détectée du mouvement de la pédale d'accélérateur inférieure à la valeur de vitesse prédéterminée.

5. Procédé selon la revendication 3 ou 4, caractérisé en ce que le paramètre de mode de conduite (F) est déterminé à nouveau après chaque mouvement de la pédale d'accélérateur (25) vers la position nulle (0) et à partir de celle-ci, vers la position au moins voisine de la position de repos (U).

6. Procédé selon l'une des revendications 1 à 4, caractérisé en ce que, lors d'un déplacement de la pédale d'accélérateur (25) dans la position nulle (0) dans le cas de parcours en déclivité, tant que la vitesse de rotation du moteur (n) dépasse une vitesse de rotation minimale prédéterminée, le processus de débrayage qui est prévu dans le cas contraire est éliminé.

7. Procédé selon la revendication 6, caractérisé en ce qu'il est déclenche un processus de débrayage, dans le cas d'un actionnement de la pédale de frein après achèvement du processus de freinage et libération de la pédale de frein.

8. Procédé selon la revendication 6, caractérisé en ce que, lors du déplacement de la pédale d'accélérateur (25) à partir de la position nulle (0) vers la position au moins voisine de la position de repos (U) tandis que le processus de débrayage est éliminé, un passage en vitesse supérieure est éliminé, indépendamment de cette position de repos qui définit dans le cas contraire le choix du rapport de vitesse.

9. Procédé selon l'une des revendications 1 à 8, caractérisé en ce qu'un déplacement en va-et-vient de la pédale d'accélérateur (25) sur une course minimale prédéterminée (y ; z) ainsi qu'à l'intérieur d'un espace de temps prédéterminé (T ; T') est détecté en tant qu'ordre volontaire de commande de changement de vitesse, un déplacement en va-et-vient de la pédale d'accélérateur (25) en arrière et en avant étant détecté comme ordre de commande de passage en vitesse supérieure et un déplacement vers l'avant et vers l'arrière de la pédale d'accélérateur (25) en tant qu'ordre de commande de rétrograder, et un changement de rapport de vitesse étant déclenché après vérification par l'ordinateur du caractère admissible de la vitesse de rotation du moteur (nG) dans la nouvelle vitesse.

10. Procédé selon l'une des revendications 1 à 9, caractérisé en ce que les modifications de direction de déplacement de la pédale de frein (16) sont saisies par la surveillance du processus de pression de frein, et en ce qu'une réduction temporaire de pression d'une valeur minimale prédéterminée à l'intérieur d'un laps de temps prédéterminé est détectée en tant qu'ordre de commande de passer en vitesse supérieure et un accroissement temporaire de pression d'une valeur prédéterminée à l'intérieur d'un laps de temps prédéterminé est détecté sélectivement comme ordre de commande de rétrograder, un changement de rapport de vitesse étant déclenche après vérification par l'ordinateur du caractère admissible de la vitesse de rotation du moteur dans le nouveau rapport de vitesse.

11. Procédé selon la revendication 10, caractérisé en ce que, avant le déclenchement du changement de rapport de vitesse lorsqu'est détecté un ordre de commande de passage en vitesse plus élevée, le caractère admissible du nouveau rapport de vitesse par rapport à la température de frein et/ou d'une déclivité éventuelle est en outre verifié.

12. Procédé selon l'une des revendications 1 à 11, caractérisé en ce que, lors d'une séquence de déplacement de la pédale d'accélérateur (25) dans laquelle la pédale d'accélérateur est déplacée dans une position (sS) prédéterminée, reconnaissable par la réalisation d'un seuil de force (S), et est maintenue dans cette position, éventuellement avec un paramètre de mode de conduite (F) en vue d'une conduite optimisée en utilisation, la vanne d'étranglement ou la tige de réglage sont commandées constamment de façon correspondante à la vitesse de rotation du moteur (n), de telle manière que l'utilisation de carburant (b) spécifique optimale pour la vitesse de rotation de moteur correspondante soit atteinte selon le champ caractéristique du moteur.

13. Procédé selon la revendication 12, caractérisé en ce que la position dans laquelle devient actif le seuil de force (S) est modifiée de façon conforme à la position de la vanne d'étranglement ou de la tige de réglage de telle manière que le rendement optimal de moteur est atteint pour la vitesse de rotation correspondante (n).

14. Procédé selon la revendication 12, caractérisé en ce que, lors d'un déplacement de la pédale d'accélérateur (25) au-delà de la position (sS) de seuil de force, des vitesses de rotation minimale de moteur croissant-continuellement sont associées aux positions de la pédale d'accélérateur.

15. Procédé selon l'une des revendications 1 à 14, caractérisé en ce que, lors d'un rappel de la pédale d'accélérateur (25) et d'une suppression du processus automatique de passage en vitesse supérieure, le rendement qui devient moins favorable est signalé au conducteur par application à la pédale d'accélérateur d'un signal sensible, par exemple sous forme d'impulsions ou de vibrations qui deviennent constamment plus fortes.

16. Procédé selon la revendication 15, caractérisé en ce que le signal sensible est appliqué avec un retard de temps à la pédale d'accélérateur (25), le retard de temps et/ou l'intensité du signal étant éventuellement choisis en fonction d'un paramètre de mode de conduite (F).

17. Procédé selon l'une des revendications 1 à 16, caractérisé en ce que, avant la détection sélective des séquences prédéterminées de modification de sens de déplacement, il est procédé à une vérification de la présence de signaux provenant des capteurs (21, 17, 18) de la pression de frein, la réponse de la pedale de frein (16) et une pédale de frein déplacée dans sa position finale, la détection sélective des séquences de modification de sens de déplacement de la pédale d'accélérateur (25) sont éliminés lorsque sont présents de tels signaux de capteurs, et des processus de rétrogradation sont déclenchés en cas de parcours descendant ainsi qu'éventuellement dans un domaine de vitesse supérieur à une valeur de vitesse prédéterminée lorsque les freins sont chauds, même en parcours à plat.

18. Procédé selon la revendication 17, caractérisé en ce que, lors du déclenchement des processus de rétrogradation, la zone de vitesse de rotation du moteur est déterminée en fonction de la pression de frein, de la vitesse de déplacement (v), de la vitesse choisie jusqu'ici (G), de la décélération du véhicule (dv/dt) et de la température de frein, et le choix de rapport de vitesse nécessaire est déterminé à l'aide de ceux-ci, et le caractère admissible de la vitesse de rotation du moteur (n) dans le rapport de vitesse déterminée est vérifié.

19. Dispositif destiné à la mise en oeuvre du procédé selon l'une des revendications 1 à 18, comportant au moins un indicateur (26) de valeur de consigne, associe à une pédale d'accélérateur (25) agissant comme organe de commande de puissance, détectant la position de celle-ci pour la puissance de marche, auquel est associée une unité de commande (9) à processeur pour la détermination d'un rapport de vitesse appropriée et pour la commande automatique de passage de vitesse, l'unité de commande à processeur (9) étant en outre reliée sur le côte entrée à un dispositif à mémoire (13) de caractéristique du véhicule, avec au moins un capteur (17, 18, 21) associé à la pédale de frein (16), et avec des capteurs détectant des données de fonctionnement comme la vitesse de rotation du moteur (n), la vitesse du véhicule (v), la position d'embrayage et la détermination du rapport de vitesse (G), et étant réliée côté sortie à un circuit de sortie (15) pour la commande de la boîte de vitesse (6), de l'embrayage (4) et de la vanne d'étranglement ou de la tige de réglage du moteur, caractérisé en ce que l'unité de commande à processeur (9) contient un module (14, 10) pour la surveillance constante du déplacement de la pédale d'accélérateur (25) et/ou de la pédale de frein (16) quant à des séquences de déplacement comportant des variations du sens de déplacement et pour la détection sélective de séquences définies, prédéterminés de modification de sens de déplacement en tant qu'ordre immédiat de commande de choix de rapport de vitesse par le conducteur.

20. Dispositif selon la revendication 19, caractérisé en ce que l'unité de commande à processeur (9) contient un processeur (10) raccordé à une mémoire de programme (14), par exemple sous forme d'une mémoire morte (ou ROM) contenant des modules de programme pour la reconnaissance de séquences définies de modification de sens de déplacement.

21. Dispositif selon la revendication 19 ou 20 destiné à la mise en oeuvre du procédé selon la revendication 2, caractérisé en ce que la pédale d'accélérateur est associée à un capteur séparé qui détecte la position nulle de la pédale d'accélérateur.

22. Dispositif selon l'une des revendications 19 à 21, destine à la mise en oeuvre du procédé selon la revendication 17, caractérisé en ce que l'unité de commande à processeur (9) est reliée à des entrées prioritaires à un détecteur (21) de pression de frein, à un détecteur (17) de contact de pédale de frein, ainsi qu'un détecteur de sécurité (18) qui détecte la position totalement enfoncée de la pédale de frein (16).

23. Dispositif selon l'une des revendications 19 à 22, destiné à la mise en oeuvre du procédé selon la revendication 12, caractérisé en ce qu'un ressort particulier est prévu pour parvenir au seuil de force (S) de la pédale d'accélérateur (25).

24. Dispositif selon l'une des revendications 19 à 21, destine à la mise en oeuvre du procédé selon la revendication 12 ou 13, caractérisé en ce qu'il est prévu un actionneur commandé par l'unité de commande (9) à processeur pour parvenir au seuil de force (S) de la pédale d'accélérateur (25).

25. Dispositif selon l'une des revendications 19 à 24, destiné à la mise en oeuvre du procédé selon la revendication 15, caractérisé en ce qu'un entraînement électromécanique, de préférence un vibreur (30), commandé par l'unité de commande (9) à processeur est associé à la pédale d'accélérateur (25) pour appliquer des signaux sensibles.

FIG. 1

FIG. 2

FIG. 3

$v \approx 65$ km/h          $F = f(s/t)$

(FIG. 6)

FIG. 4

FIG. 5

FIG. 6

(FIG. 8)

FIG. 7

FIG. 8

Fig. 9

n=2250 [1/min]

b [ g/kWh ]

544
313
265
245

PK [ N ]

C
D
F=1
F=0

137
S
HY
F=0
E'
E
136
F=1
139

sS

s [ mm ]

Fig. 10

∠° 90

n [ 1/min ]

6000
5000
4000  3000
3000  2500
2500  2000
2000  1500
1500  1000
1000  500

F=0    F=1

s [ mm ]

FIG. 11

Fig. 12